# EUROPEAN PATENT SPECIFICATION

(11) **EP 4 540 523 B1**
(45) Date of publication and mention of the grant of the patent: **29.04.2026**
(21) Application number: 23734463.5
(22) Date of filing: 16.06.2023
(51) Int. Cl.: F03D 13/10, F03D 1/06

(54) **METHODS FOR INSTALLING A CABLE-SUPPORTED ROTOR WIND TURBINE**
VERFAHREN ZUR INSTALLATION EINER KABELGESTÜTZTEN ROTORWINDTURBINE
PROCÉDÉS D'INSTALLATION D'UNE ÉOLIENNE À ROTOR SUPPORTÉE PAR CÂBLE

(30) Priority: 17.06.2022 DK PA202270328
(43) Date of publication of application: 23.04.2025
(73) Proprietor: VESTAS WIND SYSTEMS A/S, 8200 Aarhus N (DK)
(72) Inventor: SVENSTRUP, Henrik, 8200 Aarhus N (DK); TORBORG, Jens, 8200 Aarhus N (DK); HANSEN, Jesper Hermann, 8200 Aarhus N (DK); FYNBO, Peter, 8200 Aarhus N (DK)
(74) Representative: Vestas Patents Department
(86) International application number: PCT/DK2023/050150
(87) International publication number: WO 2023/241769

(56) References cited:
- CN-A- 102 536 683
- CN-A- 105 673 326
- US-A1- 2012 051 914
- US-A1- 2018 291 642

## Description

### Technical Field

The invention relates generally to wind turbines, and more particularly to methods of installing a wind turbine on which a plurality of wind turbine blades is supported with cables.

### Background

Wind turbines are used to produce electrical energy using a renewable resource and without combusting a fossil fuel. A wind turbine converts kinetic wind energy into mechanical energy and then subsequently converts the mechanical energy into electrical energy. A common type of wind turbine is the single rotor upwind horizontal-axis wind turbine (HAWT). An exemplary single-rotor HAWT includes a tower, a nacelle located at the apex of the tower, and a single rotor having a central hub and one or more blades (e.g., three blades) mounted to the hub and extending radially therefrom. The rotor is supported by the nacelle and positioned at the front of the nacelle so that the rotor faces into the wind upstream of its supporting tower. The rotor may be coupled either directly or indirectly with a generator (not shown) housed inside the nacelle and configured to convert the mechanical rotation of the rotor to electrical energy.

Wind turbine manufacturers continually strive to design and manufacture wind turbines with improved power production. The design of the wind turbine plays a significant role in the generated power output from wind. For example, energy obtained from the wind is proportional to the sweep area of the wind turbine blades. For single-rotor HAWTs, the sweep area may be increased by using longer wind turbine blades. The longer the blades, the larger the area that is traced by the blade tips. This translates to more energy extraction from the wind. However, the length, maximum chord length and root diameter of a wind turbine blade for a particular wind turbine is limited by a number of design factors.

As an exemplary limit, blade weight, and root diameter increase with blade length. Each of these physical characteristics pose significant design challenges. For one, reliably supporting an increasingly heavier wind turbine blade at its attachment point at the rotor becomes a limiting factor. The increased loading at the root magnifies fatigue at this location during rotation of the rotor and during yaw motion of the rotor when the wind turbine is operational. Transportation of the blades from a manufacturing location to site installation is a known challenge and increasing blade length, root diameter and weight make transportation more challenging.

One design solution that permits increased blade length is to support the wind turbine blades during wind turbine operation with cables. Cable supported blades may be relatively longer than a blade without cable support. Wind turbines utilizing rotors that are supported by cabling may be referred to as a "cable-supported rotor" or "cable-stayed rotor." Specifically, a webbing of cables extends to and between adjacent blades. With the aid of cables, the blades are capable of being proportionally longer while addressing the design problems identified above. In this way, cable supported rotors may be utilized to increase the sweep area of the blades to produce more energy from the wind.

CN 102 536 683 B discloses a rotor with stays for a wind turbine generator.

Accordingly, wind turbine manufacturers and operators seek improved wind turbines, and especially improved energy production while overcoming current design limitations including solutions to installation and attachment of cables at minimal cost while stabilizing wind turbine towers during energy production.

### Summary

To further these goals, and in a first aspect of the invention, a method of installing a wind turbine is disclosed. The wind turbine is preferably a single-rotor HAWT. In one embodiment, there is method of installing a cable system on the wind turbine. The cable system may include multiple cable assemblies but typically one blade cable assembly per blade. By way of example, a cable assembly includes a first cable, which may be a tip wire or center wire. The method includes coupling a pulley to a central hub or to one of the plurality of wind turbine blades and operatively coupling a hoist cable to the pulley. The method further includes attaching the hoist cable to the first cable and pulling the hoist cable to draw the first cable toward the pulley. Once the first cable is in position, the method includes coupling the first cable to the hub or to one of the wind turbine blades. This process is repeated with other cables of the cable system until the cable system is installed on the rotor. The cable system is configured to support the wind turbine blades during operation. The support provided by the cable system enables longer blades to be utilized so that the energy production for the wind turbine may be increased relative to a wind turbine having relatively shorter blades.

In one embodiment, the cable assembly includes a second cable, which may be a tip wire or a center wire, that is coupled to the hub or to another blade. Where the second cable is a center wire that is coupled to the hub, coupling the first cable according to one embodiment of the method includes coupling the first cable to a wind turbine blade.

In one embodiment, the first cable is coupled to the hub. The method further includes coupling a pulley to one of the plurality of blades, and after coupling the first cable to the hub operatively coupling a hoist cable to the pulley, attaching the hoist cable to a second cable, pulling the hoist cable to draw the second cable toward the pulley, and coupling the second cable to the one of the plurality of blades. The pulley coupled to one of the plurality of blade may be the pulley coupled to the hub or another identical or similar pulley,

In one embodiment, the cable assembly includes a third cable and the method further includes coupling a pulley to a different blade, operatively coupling a hoist cable to the pulley, attaching the hoist cable to the third cable, pulling the hoist cable to draw the third cable toward the pulley, and coupling the third cable to the different blade.

In one embodiment, the cable assembly is prepositioned at the central hub, such as in the central hub, on the outside of the central hub or in the nacelle. This may occur at the installation site or at a manufacturing location. The cable assembly is then lifted onto the tower simultaneously with the central hub installation, which for example may take place together with the nacelle or after the nacelle is installed. The cable assembly may be coupled to the central hub prior to or following installation of the central hub. For example, the center wire may be coupled to the hub while the hub is accessible at ground level and prior to installation of the hub on the tower, which for example may take place together with the nacelle or after the nacelle is installed. The cable assembly including the first cable may be lowered from the central hub during installation of the cable system on the rotor. Lowering the cable assembly may include lowering the cable assembly from the second cable, and coupling the first cable may include coupling the first cable to the one of the plurality of blades. The tip cables are coupled to the wind turbine blades through the use of a pulley and hoist cable.

In one embodiment, the cable assembly is prepositioned at the central hub, the cable assembly includes a third cable and lowering the cable assembly from the central hub includes lowering the third cable from the central hub. The embodiment may further comprise coupling a pulley to an adjacent one of the plurality of blades and after coupling the first cable to one of the plurality of blades operatively coupling a hoist cable to the pulley. Attaching the hoist cable to the third cable and pulling the hoist cable to draw the third cable toward the pulley. Then coupling the third cable to the adjacent one of the plurality of blades.

In one embodiment, the cable assembly or a portion of the cable assembly is prepositioned on the one or more or each of the wind turbine blades. This may occur at the installation site or at a manufacturing location. The prepositioned cable assembly is then lifted onto the tower simultaneously with the wind turbine blade installation. By lifted onto the tower is here meant that the cable assembly is lifted from ground level toward the top of the tower and does not indicate a direct connection between the cable assembly and the tower itself. The cable assembly may be coupled to the wind turbine blade at one end prior to blade installation. Once the blades are installed, the remaining cables are coupled to the adjacent wind turbine blade and central hub. The cable assembly may be connected preliminary to the wind turbine blade near the root end during installation of the blade. If connected, the cable assembly is disconnected at that end prior to installation of the cable assembly to the adjacent blade and to the central hub. Alternatively, the cable assembly may be left to hang from the wind turbine blade during its installation and so does not require disconnection before further coupling to an adjacent blade or to the hub.

In one embodiment, the method includes rotating the rotor, for example, by 120° or a fraction thereof for a three blade HAWT, between installation of the cable assemblies.

In one embodiment, coupling a cable includes holding the cable in an elevated position with the hoist cable while coupling the cable to the hub or to the wind turbine blade. Here, holding the cable in an elevated position encompasses positions away from the ground holding a cable for example substantially vertically from below (pulling upwards) or above (controlling position at least partially facilitated by gravity), substantially horizontal (for example in a direction between two blades) as well as at an angle upwards or downwards.

In one embodiment, after coupling a center wire, the method further includes pulling the center wire toward the central hub to increase tension in the cable system.

In one embodiment, attaching the hoist cable to a cable includes assembling a wire sock near an end of the cable and securing the hoist cable to the wire sock.

In one embodiment, attaching the hoist cable to a cable includes connecting the hoist cable to a connector member joining the first, second and third cables.

In one embodiment, pulling the hoist cable includes operating a winch to draw the hoist cable onto the winch. The tension in the hoist cable may be monitored during the pulling particularly to ensure that tension in the hoist cable is kept below a threshold value for safety reasons. The monitoring may for example be by an integrated load cell or a separate loadcell for example arranged in relation to the pulley or the winch and the measured tension used as input for the operation of the winch.

In one embodiment, the winch to pull the hoist cable is arranged up-tower, such as for example in or on the nacelle or in the hub. Particularly, the winch to pull the hoist cable may be the winch of a nacelle crane or a tower crane. This may be achieved by arranging pullies in the nacelle and/or the hub to direct the crane cable towards the pulley used for pulling the hoist cable and the cable system towards the hub so the crane cable may be used as hoist cable or be connected to a hoist cable.

In another aspect of the invention, a method of installing a wind turbine includes installing a central hub on a wind turbine tower, installing a plurality of wind turbine blades on the central hub, and installing a cable system on the rotor between adjacent wind turbine blades and the central hub. Installing the cable system includes coupling a pulley to at least one of the central hub and one or more of the plurality of blades. Installing the cable system further includes operatively coupling a hoist cable to the pulley, attaching the hoist cable to the cable system, pulling the hoist cable to draw the cable system toward the pulley; and coupling the cable system to the central hub and/or to the one or more of the plurality of blades.

In one embodiment, the cable system may include multiple cable assemblies and at least one of the cable assemblies is prepositioned on at least one of the central hub or the one or more of the plurality of blades. In this way, the cable assembly is lifted into position with the central hub or with the blade.

A particularly advantageous type of cable-stayed rotors is cable-stayed pitchable rotors as pitching allows for simple and well-known control of the rotor speed. A particular type of cable-stayed pitchable rotors are rotors with blade connecting cables between neighbouring blades where the tension in the blade connecting cables (also referred to as is adjustable by tensioning a cable (also referred to as center cable) connected to the middle of the blade connecting cables and to a tensioning system of the hub. This allows for adjusting the tension in the cables during pitching operation. The methods of the present invention are therefore particularly advantageous for installation of a cable system for cable-stayed pitchable rotors.

### Brief Description of the Drawings

The accompanying drawings, which are incorporated in and constitute a part of this specification, illustrate one or more embodiments of the invention and, together with a general description of the invention given above, and the detailed description given below, serve to explain the invention.
Fig. 1 is an elevation view of a Cable Supported Rotor wind turbine according to embodiments of the invention;
Fig. 1A is an enlarged view of a cable system coupled to a rotor shown in Fig. 1;
Fig. 1B is an enlarged view of a connector shown in Fig. 1A;
Fig. 2 is a schematic elevation view of a wind turbine tower and a rotor and showing a system for installing the cable system of Fig. 1;
Fig. 2A is an enlarged elevation view of a central hub shown in Fig. 2;
Fig. 3 is a schematic elevation view of the wind turbine tower and the rotor of Fig. 2 during installation of the cable system to the rotor according to one embodiment;
Figs. 4, 4A, 5, and 6 are schematic elevation views illustrating installation of the cable system of Fig. 1 to the rotor shown in Fig. 2;
Figs. 6A and 6B are schematic views of a wire sock and the wire sock during its use with a wire tip, respectively, according to one embodiment;
Fig. 7 is a schematic elevation view illustrating one step for installation of the cable system of Fig. 1 to the rotor shown in Fig. 2;
Fig. 7A is an enlarge view of an exemplary connection location on a wind turbine blade in Fig. 7;
Figs. 8 and 9 are schematic elevation views illustrating installation of the cable system of Fig. 1 to the rotor shown in Fig. 2;
Figs. 10 and 11 depict schematic elevation views during installation of the wind turbine of Fig. 1 according to one embodiment of the invention;
Figs. 12 and 13 depict schematic elevation views during installation of the wind turbine of Fig. 1 according to one embodiment of the invention; and
Fig. 14 is a schematic elevation view during installation of the wind turbine of Fig. 1 according to one embodiment of the invention.

### Detailed Description

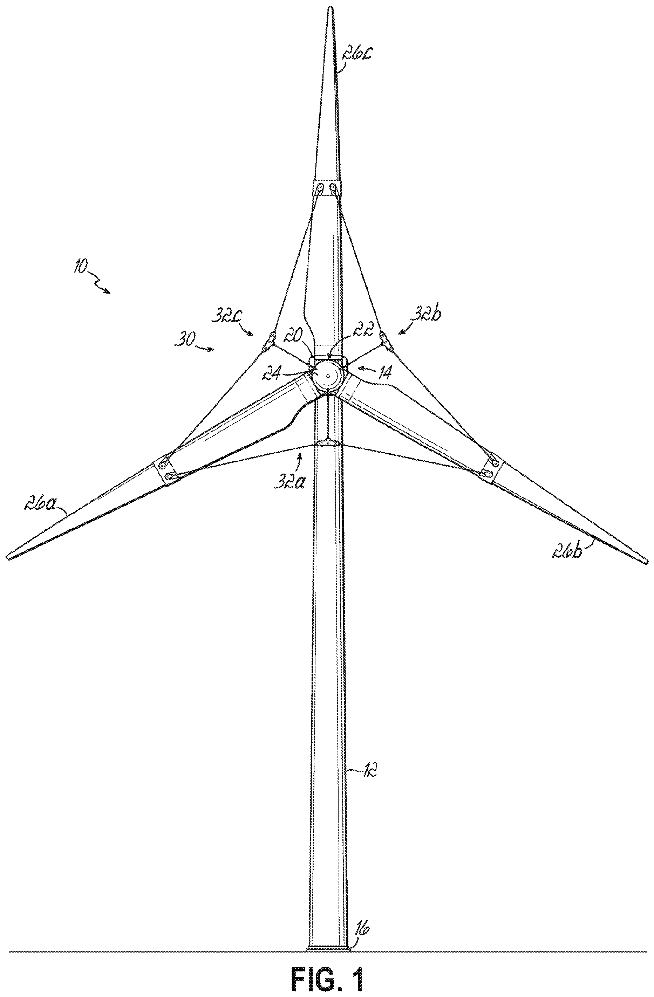

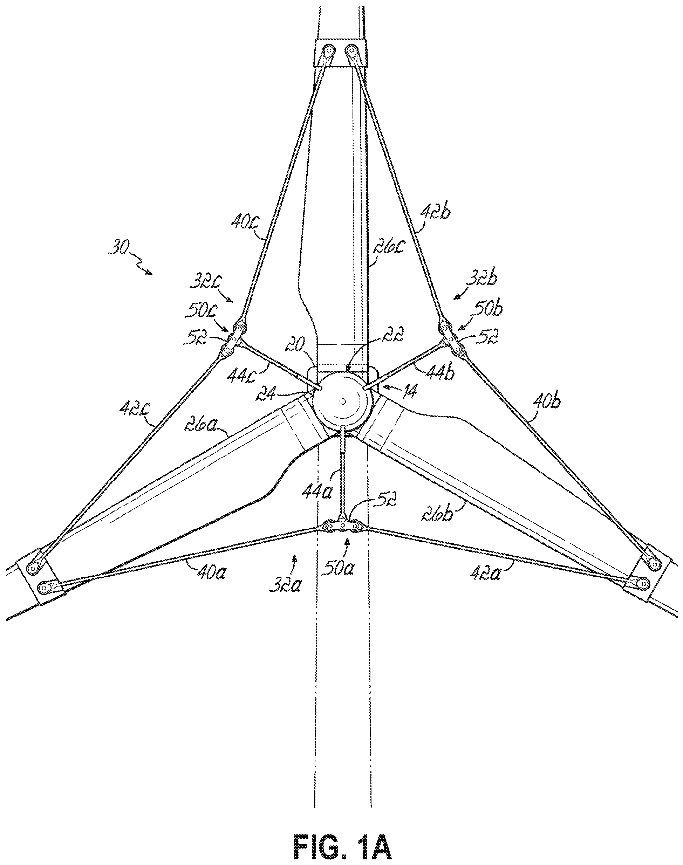

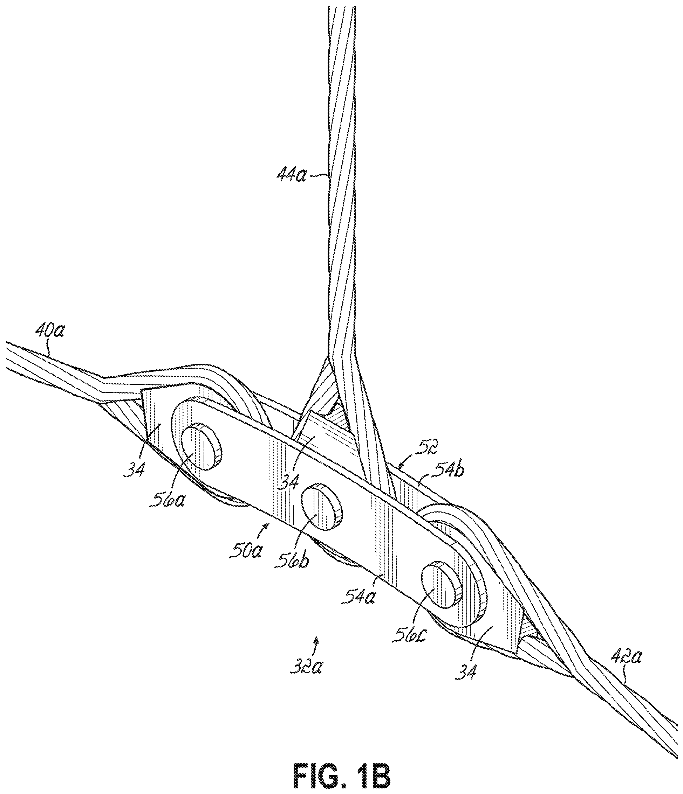

With reference to Fig. 1, a wind turbine 10 includes a tower 12 and an energy generating unit 14 (including the nacelle) disposed at the apex of the tower 12. The tower 12 may be coupled to a foundation 16 at a lower end thereof. The foundation 16 may be a relatively large mass (e.g., concrete, anchor cage, etc.) embedded in the ground and through which forces on the wind turbine 10 may be ultimately transferred. Although not shown, in an alternative embodiment, the foundation 16 may include an offshore platform or the like used in offshore wind turbine applications. The tower 12 supports the weight of the energy generating unit 14 and operates to elevate the energy generating unit 14 to a height above ground level or sea level at which faster moving air currents of lower turbulence are typically found.

In that regard, the energy generating unit 14 transforms the energy of the wind into electrical energy. The energy generating unit 14 typically includes a housing or nacelle 20, a rotor 22 having a central hub 24 and wind turbine blades 26a, 26b, 26c (e.g., three blades) mounted to the central hub 24 and extending radially therefrom. The energy generating unit 20 includes a drive train for including a generator (not shown) for converting mechanical energy into electrical energy and optionally a gear arrangement. A substantial portion of the drive train may be positioned inside of the nacelle 20 of the wind turbine 10. In addition to the generator, the nacelle 20 typically houses miscellaneous components required for converting wind energy into electrical energy and various components needed to operate, control, and optimize the performance of the wind turbine 10. The wind turbine blades 26a, 26b, 26c are configured to interact with the wind. The wind produces lift and causes the rotor 22 to spin or rotate generally to define a sweep area of the wind turbine blades 26a, 26b, 26c. The energy generating unit 14 generates power from the wind that passes through the swept area of the rotor 22. During operation of the wind turbine 10, wind turbine blades 26a, 26b, 26c are supported by a cable system 30, which carry some of the static and dynamic loads. In essence, the cable system 30 cause the wind turbine blades 26a, 26b, 26c to mutually support each other. For example, edgewise loads and flapwise loads are shared among the wind turbine blades 26a, 26b, 26c via the cable system 30.

As shown, in the exemplary embodiment of Fig. 1, the cable system 30 includes three cable assemblies 32a, 32b, 32c, one cable assembly 32a, 32b, 32c, for each wind turbine blade 26a, 26b, 26c. In an exemplary embodiment, each cable assembly 32a, 32b, 32c is connected to the rotor 22 at three locations, one connection at the central hub 24 and one connection at each of two adjacent wind turbine blades 26a, 26b, 26c. That is, individual ones of the cable assemblies 32a, 32b, 32c are coupled to and between adjacent wind turbine blades 26a, 26b, 26c and to the central hub 24. As shown, this forms a Y-shaped cable configuration between adjacent wind turbine blades 26a, 26b, 26c and central hub 24.

More specifically, and by way of example only, as is shown in Fig. 1A, the cable assembly 32a is coupled to the wind turbine blade 26a, to the wind turbine blade 26b, and to the central hub 24. Similarly, the cable assembly 32b is coupled to the wind turbine blade 26b, to the wind turbine blade 26c, and to the central hub 24, and the cable assembly 32c is coupled to the wind turbine blade 26c, the wind turbine blade 26a, and the central hub 24. Stated another way, the cable assemblies 32a, 32b, 32c may be connected directly or indirectly to the wind turbine blades 26a, 26b, 26c and directly or indirectly to the central hub 24. Although not shown, connection between the cables of each assembly 32a, 32b, 32c and the rotor 22 may be by way of wire rope fittings commonly used in the industry. For example, and with reference to Fig. 1B, a solid thimble with integrated bearing 34 may define one or more cable ends in each assembly 32a, 32b, 32c. The fittings cooperate with other fittings or receptacles on the central hub 24 and/or on the wind turbine blades 26a, 26b, 26c to mechanically attach the assembly 32a, 32b, 32c sufficiently to carry a portion of the loads on the rotor 22.

Further in that regard, while not shown in detail in the figures, each of the wind turbine blades 26a, 26b, and 26c may include a cable-to-blade connection point to which the cable assemblies 32a, 32b, or 32c are coupled. These connections are described in detail in commonly owned PCT Application Nos. PCT/DK2021/050374 and PCT/DK2022/050051, which are incorporated by reference herein in their entireties. Although not shown, by way of example only, the cable-to-blade connection may be at a split position between an inboard blade part and an outboard blade part, which are connected to each other to form the wind turbine blade. Such sectional blade designs are generally known in the wind turbine industry and may facilitate transportation of the blades. The connection point itself may be positioned outside of the wind turbine blade though at the split position. For example, a cable connection may extend outwardly from the blade and be available for connection to the cable system 30. Also not shown in the figures, the central hub 24 may include a cable-to-hub structure to which the cable assemblies 32a, 32b, 32c are coupled and by which the cable assemblies 32a, 32b, 32c are tensioned prior to and during operation of the wind turbine 10. A cable-to-hub structure usable for coupling to the cable assemblies 32a, 32b, 32c is also described in detail in commonly owned PCT Application Nos. PCT/DK2021/050374 and PCT/DK2022/050051. Embodiments of the invention are not limited to the number of wind turbine blades. Specifically, while the wind turbine 10 is shown with three wind turbine blades, embodiments of the invention may include more than three wind turbine blades with a cable assembly coupled between and to each of two adjacent blades and the central hub.

Advantageously, the cable system 30 according to embodiments of the invention carries a portion of the load on the wind turbine blades 26a, 26b, 26c, particularly during operation of the wind turbine 10. For instance, the cable system 30 carries at least a portion of the dynamic loads from movement of the wind turbine blades 26a, 26b, 26c due to the wind and gravity. The offloading of those loads from the blades 26a, 26b, 26c to the cable system 30 is advantageous. As one exemplary advantage, the blades 26a, 26b, 26c may be redesigned to be longer without substantially increasing their diameters at each blade root at its connection to the central hub 24 as compared to the diameter of wind turbine blades without cable support. Thus, a sweep area of the wind turbine blades 26a, 26b, 26c may be greater than a sweep area of wind turbine blades not supported by cables. Other advantages are also possible.

With continued reference to Fig. 1A, in one embodiment, one or more of the cable assemblies 32a, 32b, 32c includes two or more cables that are connected to one another and to the wind turbine blades 26a, 26b, 26c and to the central hub 24. In the exemplary embodiment shown, each cable assembly 32a, 32b, 32c includes three separate cables corresponding to each portion of the Y-shaped installed cable assembly. For example, cable assembly 32a includes a first cable 40a coupled to the wind turbine blade 26a at one end and a second cable 42a coupled to the wind turbine blade 26b at one end. The cable assembly 32a includes a third cable 44a coupled to the central hub 24. Each of the first and second cables 40a and 42a may be referred to herein as tip wires or tip cables, and the third cable 44a may be referred to as a center wire or center cable. Each of the tip wires 40a and 42a and center cable 44a is coupled at intersection 50a. One or more of the tip wires 40a, 42a and the center cable 44a may include a solid thimble with integrated bearing 34, described above, at one or both ends to connect to connection points on the wind turbine blade 26a, 26b and/or to the central hub 24, respectively. The two tip wires 40a and 42a may be manufactured as one unit with each end of the unit forming a tip wire. The two tip wires 40a and 42a and the center cable 44a may be manufactured as one unit, e.g. a T-shaped rope with three ends, with the ends of the unit forming two tip wires 40a, 42a and one center cable 44a, respectively.

Similarly, cable assembly 32b includes a first cable 40b coupled to the wind turbine blade 26b at one end, a second cable 42b coupled to the wind turbine blade 26c at one end, and a third cable 44b coupled to the central hub 24. Each of the first and second cables 40b and 42b may be referred to herein as tip wires or tip cables, and the third cable 44b may be referred to as a center wire or center cable. Each of the wires 40b, 42b, and 44b is coupled at intersection 50b. One or more of the tip wires 40b, 42b, and the center cable 44b may include a solid thimble with integrated bearing 34, described above, at one or both ends to connect to the wind turbine blade 26b, 26c, to the central hub 24, and/or at the intersection 50b.

Cable assembly 32c includes a first cable 40c coupled to the wind turbine blade 26c at one end, a second cable 42c coupled to the wind turbine blade 26a at one end, and a third cable 44c coupled to the central hub 24. Each of the first and second cables 40c and 42c may be referred to herein as tip wires or tip cables, and the third cable 44c may be referred to as a center wire or center cable. Each of the wires 40c, 42c, and 44c is coupled at intersection 50c. One or more of the first cable 40c, the second cable 42c, and the third cable 44c may include a solid thimble with integrated bearing 34, described above, at one or both ends to connect to the wind turbine blade 26c, 26a, to the central hub 24, and/or at the intersection 50c.

With reference to Fig. 1B, by way of example, one or more of the intersections 50a, 50b, 50c may include a connector 52 to which first, second, and third cables of the respective cable assembly are joined together. As shown in Fig. 1B, the connector 52 includes two opposing plates 54a, 54b joined together by three pins 56a, 56b, 56c. The pins 56a, 56b, 56c receiving a respective one end of the tip wire or end of the center wire, such as via the solid thimble with integrated bearing 34, to form a cable assembly. By way of example, one or more of the wires and cables of the cable system 30 may comprise a polymer material as load bearing component. The polymer material may, e.g., be an Ultra High Molecular Weight Polyethylene, e.g. of the kind being manufactured under the tradename 'Dyneema'. Ultra High Molecular Weight Polyethylene fibres are particularly advantageous due to a combination of a high strength/weight ratio and good fatigue properties. As an alternative, the polymer material may be based on polyester, polyamid, nylon, polypropylene, aramid, etc. As another alternative, the polymer material may be a composite materials, e.g. a liquid crystal polymer, such as polybenzoxazole (PBO). However, the cable system 30 is not limited to polymer material as various types of steel cabling may be utilized alone or in combination with polymer materials.

In Figs. 1 and 1A, each cable assembly 32a, 32b, 32c is taut in its attachment between the central hub 24 and the wind turbine blades 26a, 26b, 26c. Tensioning the cable assemblies 32a, 32b, 32c may be achieved by a mechanism in the central hub 24. An exemplary mechanism is described in commonly owned PCT/DK2021/050374 and PCT/DK2022/050051 and may be achieved by the use of hydraulic cylinders or similar that are configured to pull on one or more of the center cables 44a, 44b, 44c following installation of the cable assemblies 32a, 32b, 32c, which is described below. Pulling on the center cable 44a, 44b, 44c in a direction toward the central hub 24 places the tip wires 40a, 40b, 40c, 42a, 42b, 42c and the center cables 44a, 44b, 44c in tension. Once tensioned, the cable assemblies 32a, 32b, 32c share loads imposed on the wind turbine blades 26a, 26b, 26c.

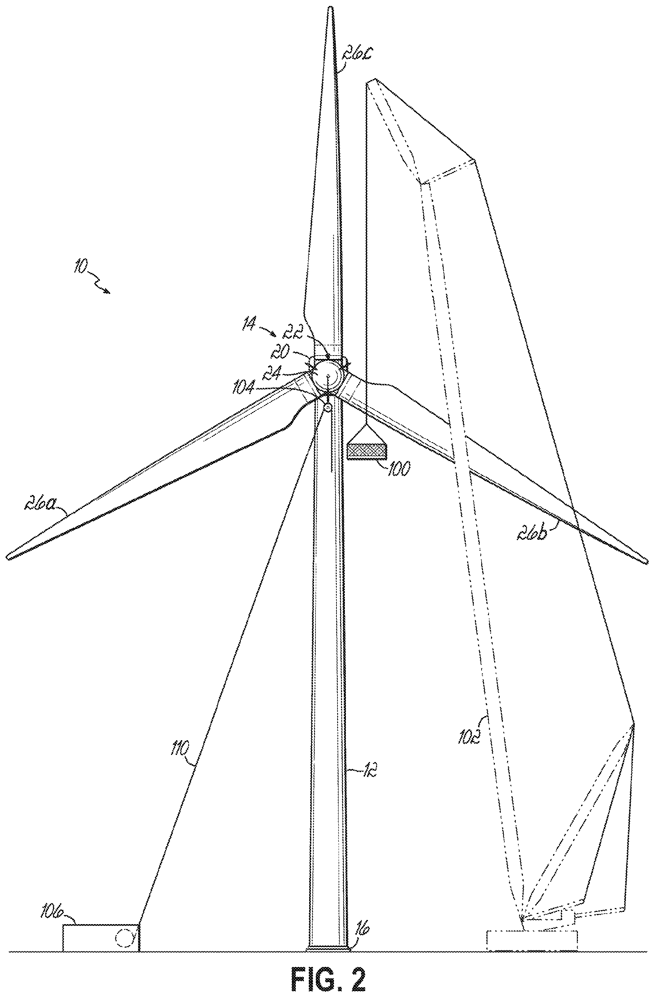

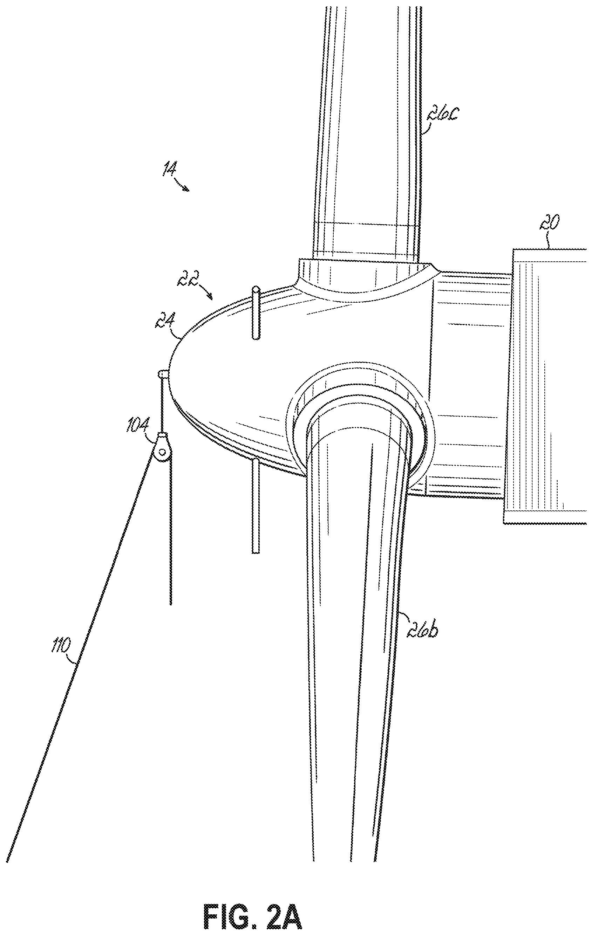

According to one embodiment of the invention, the cable system 30 is installed on the wind turbine 10 during or following installation of the rotor 22. An exemplary installation is shown with reference to Figs. 2-9 in which the cable system 30 is installed after rotor installation is complete. In Fig. 2, the tower 12, energy generating unit 14 including the nacelle, and rotor 22 are assembled prior to installation of the cable system 30. Following assembly of the rotor 22, if necessary, the rotor 22 is rotated to the orientation shown in which an adjacent pair of blades 26a and 26b are in the 8 o'clock and 4 o'clock positions, respectively, but other orientations of the blades may be used during installation of the cable system 30. A platform 100 is positioned proximate the central hub 24. In the exemplary installation, the platform 100 is a basket elevated by a crane 102 to enable personnel (e.g., construction workers) to manually access the central hub 24, the cable system 30, and the wind turbine blades 26a, 26b, 26c. Other types of access systems are also feasible, such as for example a cherry picker, rope access, or blade access platform.

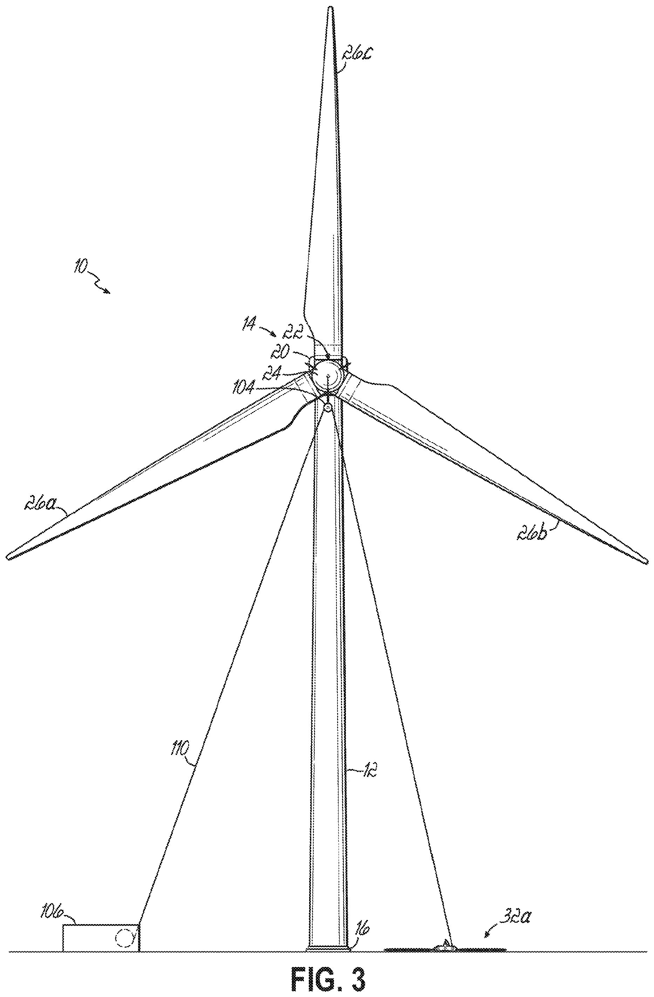

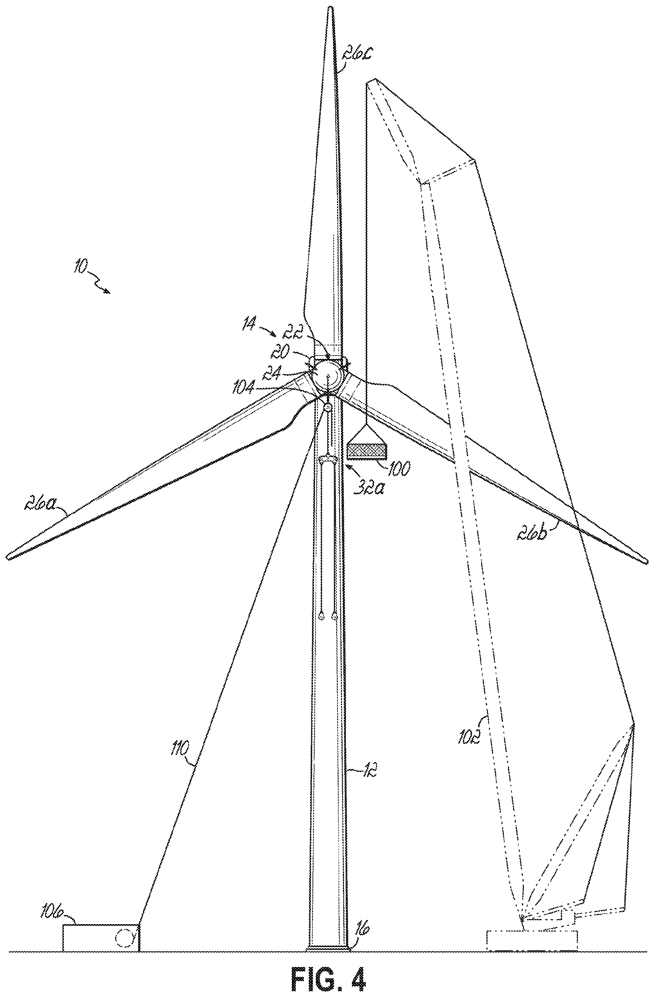

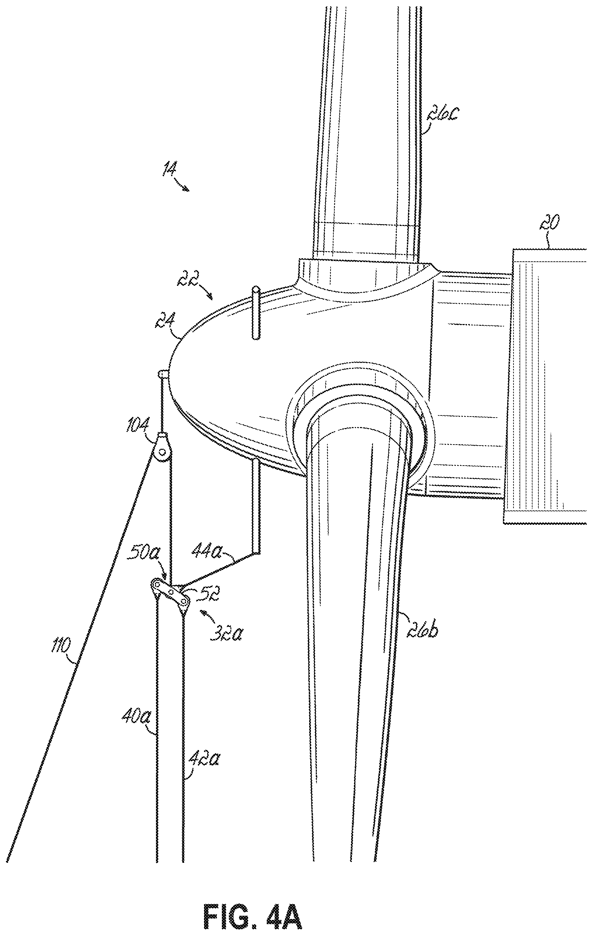

As shown in Figs. 2 and 2A, from the platform 100, personnel attach a pulley 104 to the central hub 24 proximate a point of connection of the center cable 44a of the cable assembly 32a (e.g., shown in Figs. 3 and 4) to the central hub 24. A winch 106 or similar device is positioned on the ground proximate the tower 12, and a hoist cable 110 is withdrawn from the winch 106 and fed through the pulley 104.

Embodiments of the invention are not limited to the winch 106 being on the ground. For example, the winch 106 may be attached to the central hub 24 or to the wind turbine blade 26a or 26b. However, there may be some advantage (such as ease of connection to a power supply) to placement of the winch 106 near or at ground level. In the exemplary embodiment shown, the cable assembly 32a, including the tip wires 40a and 42a and center cable 44a, each of which is coupled to the connector 52, is shown coiled up on the ground proximate the tower 12. After being operably coupled to the pulley 104, the hoist cable 110 is coupled to the cable assembly 32a while the cable assembly 32a is on the ground as is shown in Fig. 3. By way of example only, the hoist cable 110 is coupled to the connector 52 (Fig. 1B) of the cable assembly 32a.

With reference to Figs. 4 and 4A, the winch 106 is activated to draw in the hoist cable 110 and therefore lifts the attached cable assembly 32a toward the pulley 104. In that regard, platform 100 and/or crane 102 may not be utilized to lift the cable assembly 32a. As shown, once the cable assembly 32a is near the point of attachment of the cable assembly 32a to the central hub 24, personnel on the platform 100 attach the center cable 44a to the central hub 24 (e.g., a hydraulic cylinder). In this way, the winch 106, pulley 104, and hoist cable 110 carry the weight of the cable assembly 32a while personnel on the platform 100 couple the cable assembly 32a to the hub 24. The personnel may more easily manipulate and couple an end of the center cable 44a to the central hub 24 because it is not under tension. After coupling, tension in the hoist cable 110 is released and the hoist cable 110 is then disconnected from the cable assembly 32a, and the pulley 104 is disconnected from the central hub 24. The cable assembly 32a is left to hang from the central hub 24 by the center cable 44a. In another embodiment, the pulley attached permanently to the central hub, for example during manufacturing of the hub. In this case, the pulley may be arranged inside the hub and accessible from outside the hub via openings in the hub. One or more other pulleys may be attached to the blades in later steps of method of installing the cable system 30.

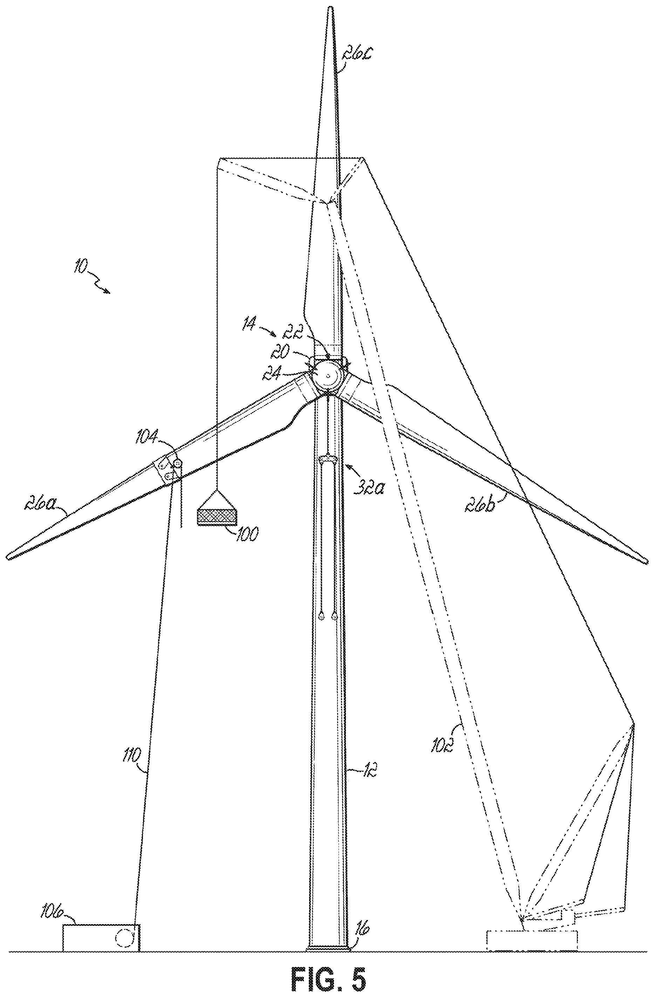

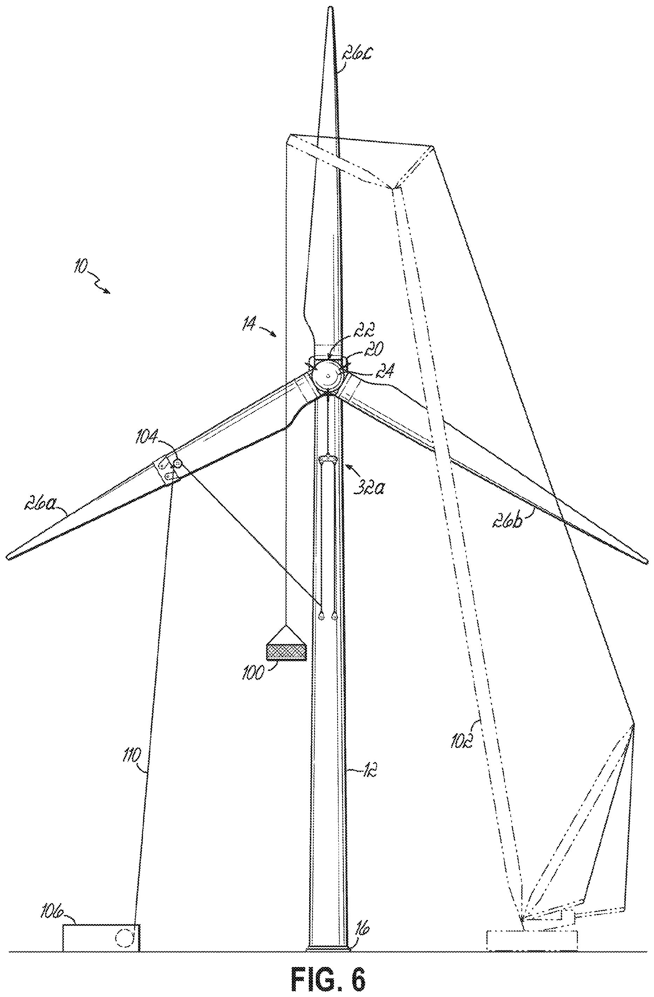

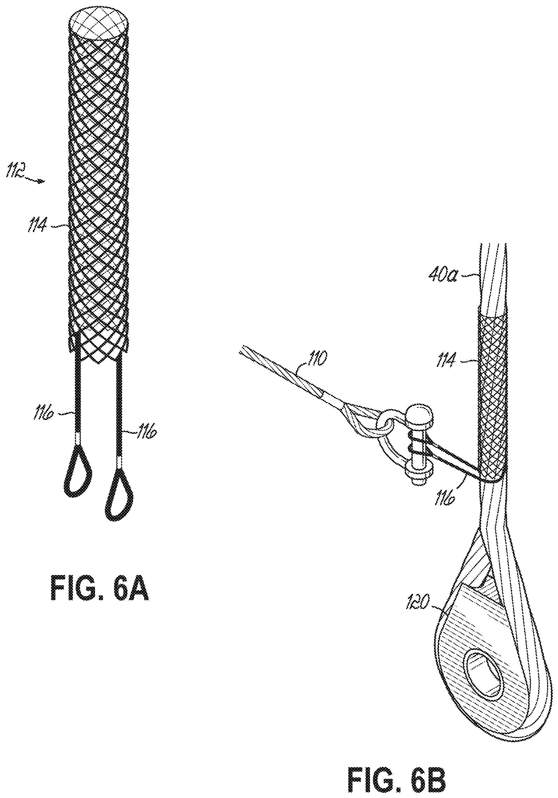

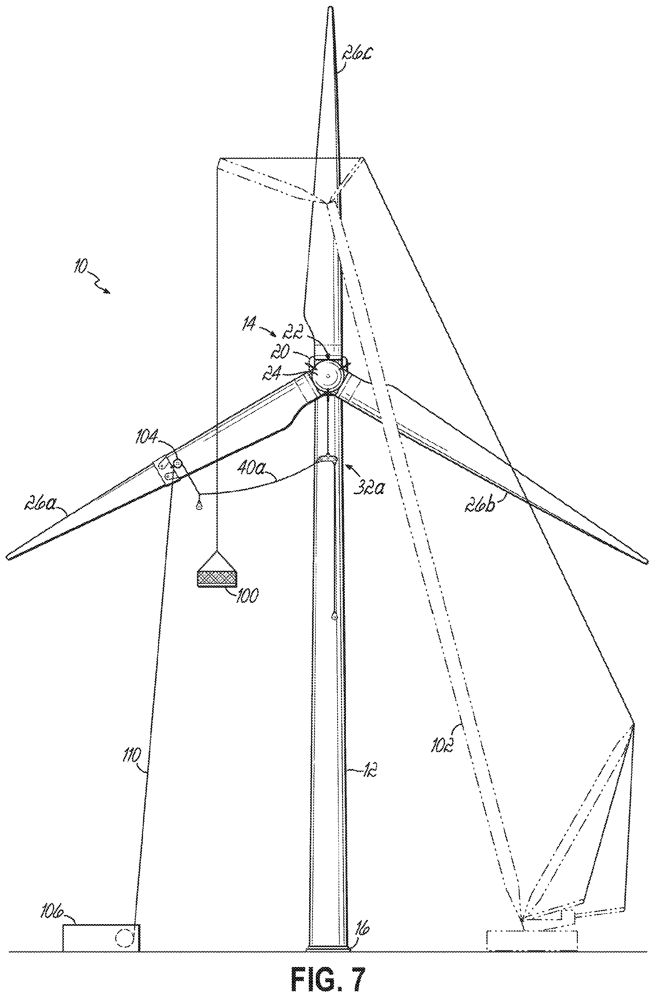

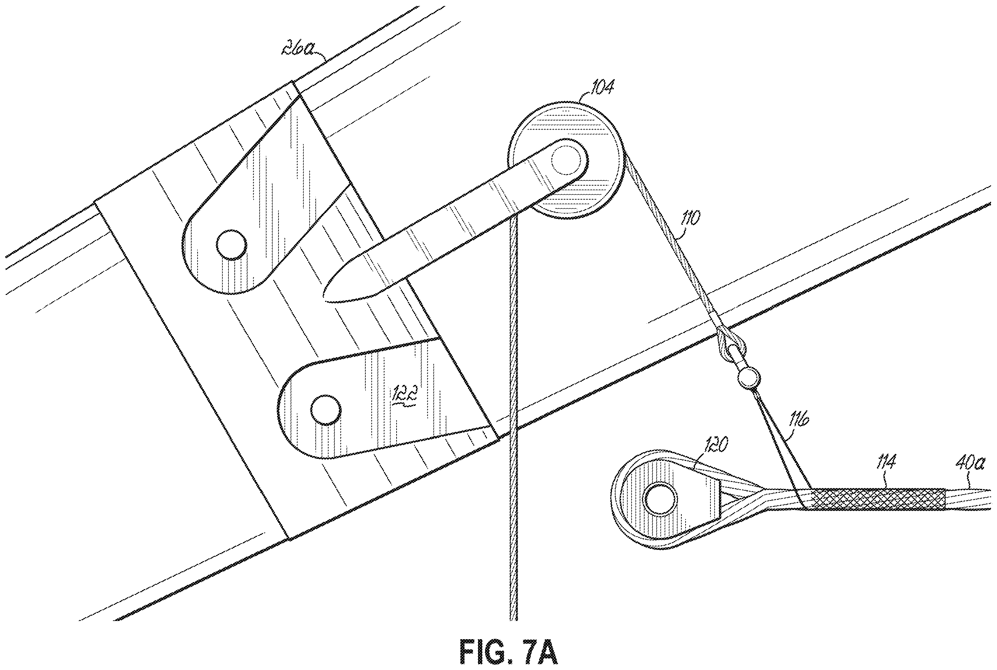

With reference to Fig. 5, the crane 102 moves the platform 100 toward the wind turbine blade 26a. With the platform 100 near the wind turbine blade 26a, personnel attach a pulley 104 to the blade 26a proximate a connection point for the cable assembly 32a to the blade 26a. With the hoist cable 110 operably coupled to the pulley 104, the crane 102 moves the platform 100 with the hoist cable 110 to the hanging cable assembly 32a. Personnel on the platform 100 attach the hoist cable 110 to the cable assembly 32a, as is shown in Fig. 6, specifically near the end of the tip wire 40a opposite the end coupled to connector 52. In an alternative embodiment (not shown) to the process steps shown in Figs. 5 and 6, the hoist cable is attached to the cable assembly optionally with the hoist cable operably coupled to the pulley before the platform is moved with together with the pulley to near the wind turbine blade. While the platform is moved, the hoist cable is allowed to be released from the wench, so no significant tension is applied in the cable assembly attached to the hoist cable and the platform is only exposed to vertical forces. Near the blade, personnel attach a pulley with the hoist cable to the blade proximate a connection point for the cable assembly to the blade. This alternative embodiment is particular advantageous as it reduces the number of vertical repositioning of the platform and reduces the risk of working under suspended load. In one embodiment, the hoist cable 110 is coupled to the tip wire 40a with a wire sock 112 such that an end of the tip wire 40a is more easily accessible for connection to the wind turbine blade 26a near the pulley 104. As shown in Figs. 6A and 6B, the wire sock 112 may have a mesh-like blanket portion 114 that is configured to be wrapped around the tip wire 40a, and one or more eyelets 116 configured to be coupled to the hoist cable 110. With reference to Fig. 6A, the blanket portion 114 may be stitched together around the wire 40a. In one embodiment, the wire sock 112 is attached near, but not at, the end of the tip wire 40a. This is shown, by way of example only, in Figs. 6B and 7A.

With reference to Figs. 7 and 7A, activating the winch 106 pulls in the hoist cable 110 into the winch 106 and draws the tip wire 40a toward the wind turbine blade 26a. Advantageously, the winch 106 and hoist cable 110 carry the weight of the tip wire 40a as it is pulled toward the wind turbine blade 26a. By comparison, it is contemplated that utilizing the platform 100 to pull the tip wire 40a toward the wind turbine blade 26a would place significant horizontal loads on the platform 100 from the dead weight of the tip wire 40a. The use of the winch 106 and hoist cable 110 to pull the tip wire 40a significantly reduces or avoids placing horizontal loads on the platform 100. With the end of the tip wire 40a near the wind turbine blade 26a and while the winch 106 holds the tip wire 40a in position, personnel on the platform 100 couple the tip wire 40a to the wind turbine blade 26a. Again, the winch 106 carries the bulk of the weight of the cable assembly 32a not supported by the hub 24 while personnel couple the end of the tip wire 40a to the wind turbine blade 26a. In the exemplary embodiment, a solid thimble with integrated bearing 120 defines the end of the tip wire 40a shown. In Fig. 7A, the bearing 120 is inserted into a receptacle 122 on the wind turbine blade 26a to couple the tip wire 40a (i.e., the cable assembly 32a) to the wind turbine blade 26a.

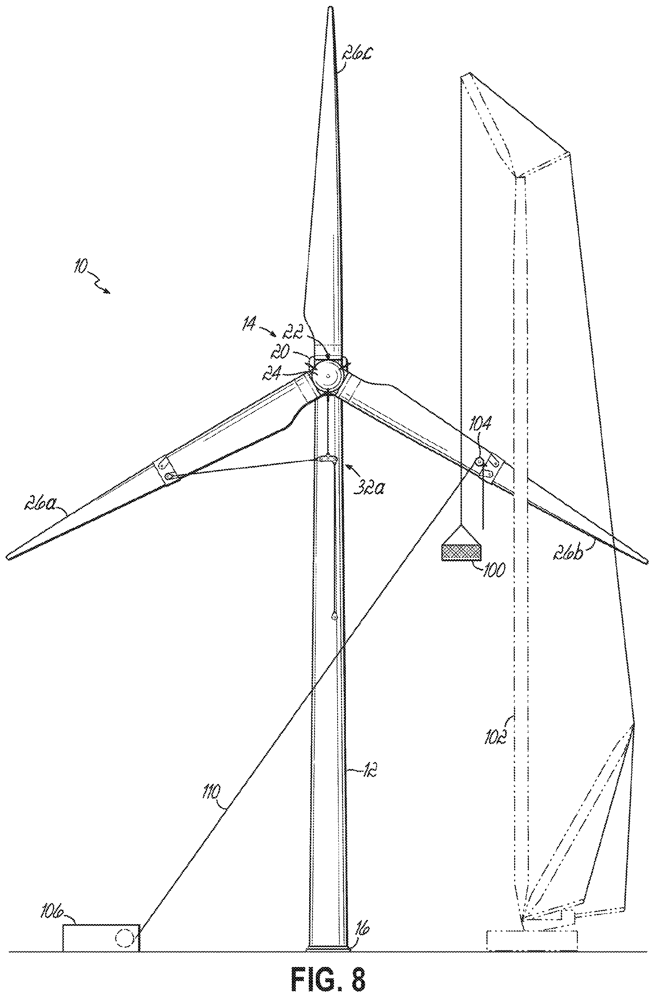

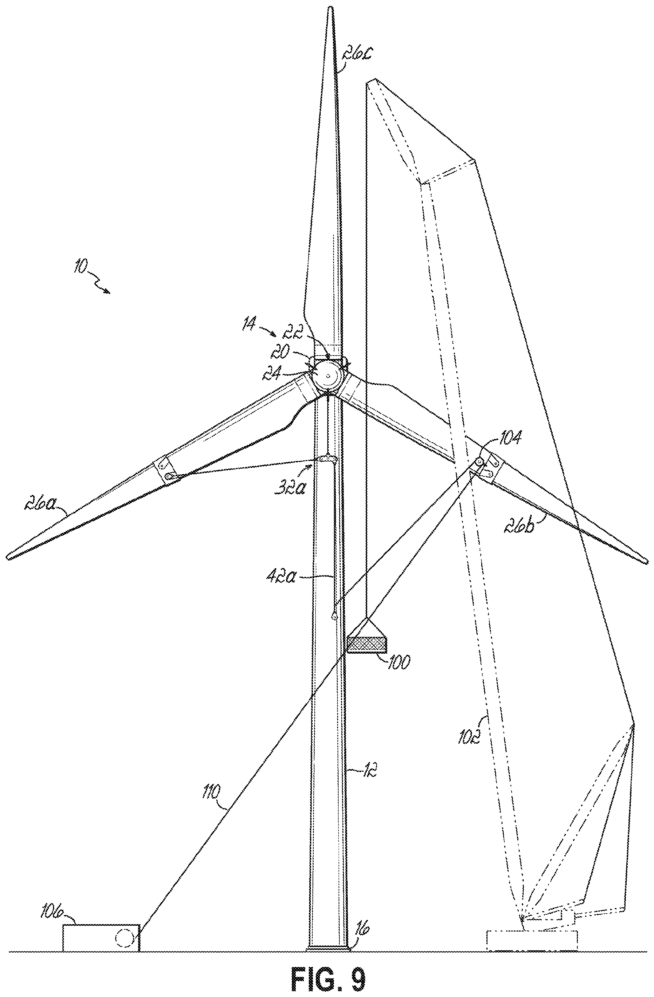

Once the cable assembly 32a is secured to one wind turbine blade 26a, the cable assembly 32a is coupled to the adjacent wind turbine blade 26b in a similar manner for example as is shown in Figs. 8 and 9 or by the corresponding alternative embodiment described above. To that end, the crane 102 moves the platform 100 toward the wind turbine blade 26b. With the platform 100 near the wind turbine blade 26b, personnel attach a pulley 104 to the blade 26b proximate a connection point for the cable assembly 32a to the blade 26b, as shown in Fig. 8. The crane 102 moves the platform 100 with the hoist cable 110 to the hanging cable assembly 32a, as shown in Fig. 9, and personnel on the platform 100 attach the hoist cable 110 to the cable assembly 32a, specifically near one end of the tip wire 42a. In one embodiment, the hoist cable 110 is coupled to the tip wire 42a with a wire sock 112, similar to the one shown in Figs. 6B and 7A. With this configuration, an end of the tip wire 42a is more easily accessible for connection to the wind turbine blade 26b near the pulley 104.

With reference to Fig. 9, activating the winch 106 pulls in the hoist cable 110 into the winch 106 and draws the tip wire 42a toward the wind turbine blade 26b. With the end of the tip wire 42a near the wind turbine blade 26b, personnel on the platform 100 couple the tip wire 42a to the wind turbine blade 26b. Although not shown, in the exemplary embodiment, a solid thimble with integrated bearing 120 (shown in Figs. 1B and 6B) defines the end of the tip wire 42a. The tip wire 42a may then be coupled to the wind turbine blade 26b similar to that shown in Fig. 7A, in which the bearing 120 is inserted into a receptacle on the wind turbine blade 26b to couple the cable assembly 32a to the wind turbine blade 26b. The cable assembly 32a is thereby coupled to each of the adjacent wind turbine blades 26a and 26b and to the central hub 24.

Although not shown in the figures, following coupling the cable assembly 32a to the rotor 22 as is shown schematically in Figs. 2-9, the rotor 22 is rotated 120° to position either of the wind turbine blades 26b and 26c or wind turbine blades 26c and 26a in the 8 o'clock and 4 o'clock positions, respectively. It should be noted that rotation of the rotor by smaller or larger fraction of a full rotation may facilitate the installation process by orientation of the cables or blades during for example so that gravity will facilitate the installation or for safety reasons. One of the cable assemblies 32b and 32c is coupled to the respective adjacent wind turbine blades 26a, 26b, 26c in the same manner described above with reference to the cable assembly 32a to the wind turbine blades 26a and 26b in Figs. 2-9. Following installation of one of the cable assemblies 32b and 32c according to that process, the rotor 22 is rotated 120° and the remaining cable assembly 32b or 32c is then coupled to the respective wind turbine blades 26a, 26b, 26c in the same manner. Thus, each cable assembly 32a, 32b, 32c is coupled to respective pairs of adjacent wind turbine blades 26a, 26b, 26c and to the central hub 24.

In detail, during installation of the cable assemblies 32b and 32c, which follows the procedure described above with respect to cable assembly 32a in Figs. 2-9, a pulley 104 is coupled to the hub 24, the cable assembly 32b or 32c is coupled to the winch 106 via a hoist cable 110, the cable assembly 32b, 32c is hoisted by the winch 106 toward the central hub 24, and the center cable 44b, 44c of the cable assembly 32b, 32c is coupled to the hub 24. Once the cable assembly 32b, 32c is coupled to the hub 24, a pulley 104 is coupled to the blade 26b or 26c, the hoist cable 110 is coupled to the respective cable assembly 32b, 32c (i.e., to the tip wire 40b, 40c), the tip wire 40b, 40c is drawn to the blade 26b or 26c by activating the winch 106, and the tip wire 40b, 40c is coupled to the blade 26b or 26c.

As an example of the cable assembly 32b, the tip wires 40b and 42b are then coupled to adjacent wind turbine blades 26b and 26c. In that regard, a pulley 104 is coupled to the blade 26b or 26c, the hoist cable 110 is coupled to the cable assembly 32b (i.e., to the tip wire 42b), the tip wire 40b or 42b is drawn to the blade 26b or 26c by activating the winch 106. Once in position, the tip wire 40b or 42b is coupled to the blade 26b or 26c. After rotating the rotor 22 by 120° to position the adjacent blades 26c and 26a in the 8 o'clock and 4 o'clock positions, the same process is repeated for the remaining adjacent pair of wind turbine blades 26c and 26a with remaining cable assembly 32c.

Following coupling, tension in each of the assemblies 32a, 32b, 32c is adjusted by operation of a tensioning system as is described in one or both of PCT Application Nos. PCT/DK2021/050374 and PCT/DK2022/050051. Although not shown, as an alternative to lifting the cable assembly 32a, 32b, 32c with a winch, the platform 100 and crane 102 may be used to lift one or more of the wires/cables 40a-40c, 42a-42c, 44a-44c or the cable assemblies 32a, 32b, 32c to the central hub 24 and/or pull the tip wires 40a, 40b, 42a, 42b, 44a, 44b toward the respective wind turbine blades 26a, 26b, 26c without use of a winch.

Whereas Figs. 2-9 schematically depict installation of the cable assemblies 32a, 32b, 32c following installation of the rotor 22 on the tower 12. Embodiments of the invention are not limited to cable assembly installation after rotor installation/assembly. In one embodiment of the invention, one or more of the individual wires/cables 40a-40c, 42a-42c, 44a-44c separate from the respective cable assemblies 32a, 32b, and 32c or the cable assembly 32a, 32b, 32c may be coupled to the central hub 24 or may be coupled to one or more of the wind turbine blades 26a, 26b, and 26c before installation of the central hub 24 or before installation of the blades 26a, 26b, and 26c on the central hub 24. Advantageously, personnel may couple one or more of the wires 40a-40c, 42a-42c, 44a-44c or the cable assembly 32a, 32b, 32c to the central hub 24 or to a respective wind turbine blade 26a, 26b, 26c while the central hub 24 or the wind turbine blades 26a, 26b, 26c is accessible at ground level.

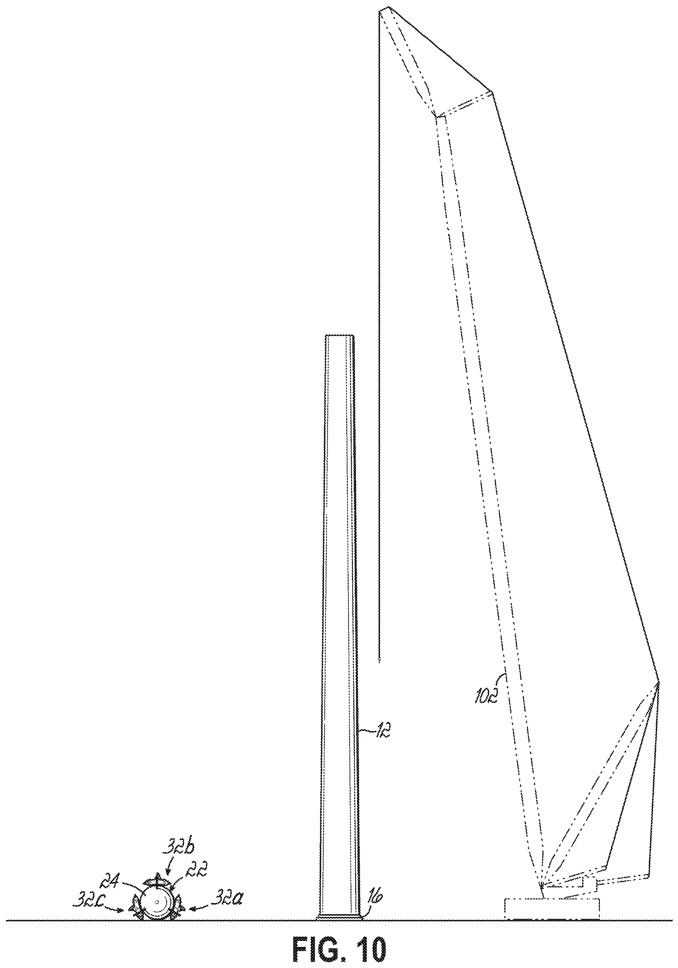

By way of example and with reference Fig. 10, in one embodiment, each of the cable assemblies 32a, 32b, and 32c is coupled to the central hub 24 while the central hub 24 is accessible at ground level. Coupling the cable assemblies 32a, 32b, and 32c may occur at the installation site or at a manufacturing location. Either way, one or more of the cable assemblies 32a, 32b, and 32c may be prepositioned in the central hub 24 prior to its installation on the tower 12. In that regard, although not shown, the cable assemblies 32a, 32b, 32c may be stored inside the central hub 24 prior to lifting the hub 24 into position with respect to the nacelle 20 on the tower 12.

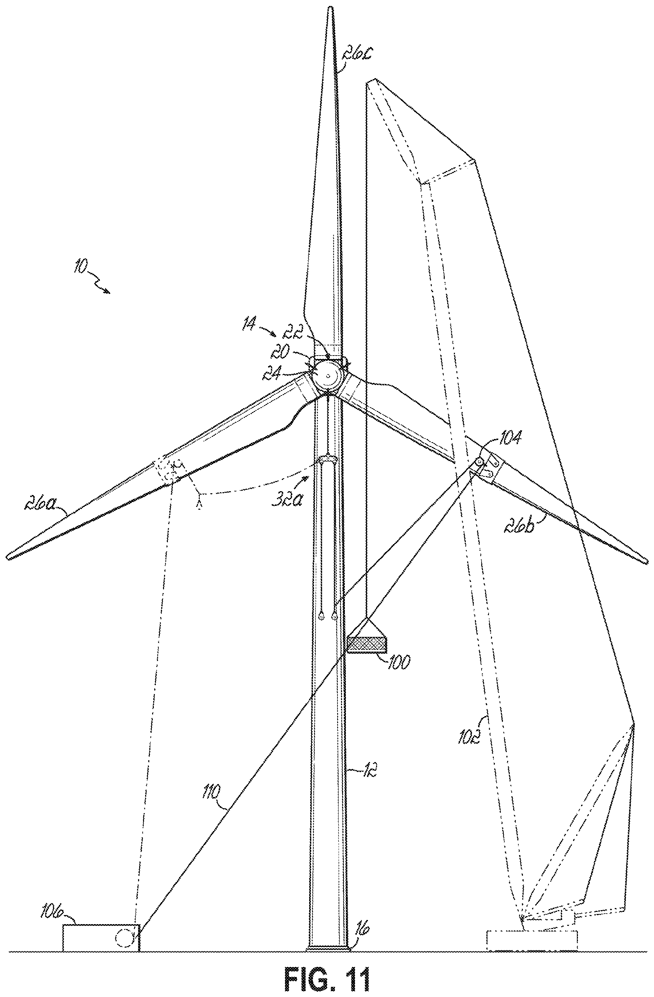

In Fig. 11, once the rotor 22 is assembled, with the central hub 24 and wind turbine blades 26a, 26b, 26c, the cable assembly 32a is let out from the central hub 24 and left to hang from the hub 24 by center cable 44a. As such, the exemplary process avoids coupling the pulley 104 to the central hub 24 prior to coupling the cable assemblies 32a, 32b, 32c to the central hub 24. Advantageously, coupling of each cable assembly 32a, 32b, 32c occurs on the ground and so is completed in the absence of the winch 106 and crane 102.

Following extension of the cable assembly 32a from the central hub 24, the process explained above with reference to Figs. 2-9 may be used to couple the cable assemblies 32a, 32b, and 32c to the rotor 22. As an example, as is shown in Fig. 11 in phantom line, a pulley 104 is coupled to the wind turbine blade 26a, and the hoist cable 110 is operably coupled to the pulley 104 and to the cable assembly 32a near an end of the tip wire 40a. The winch 106 and hoist cable 110 are connected via the wire sock 112 (Fig. 6B) on the tip wire 40a to pull the tip wire 40a toward the wind turbine blade 26a. Personnel on the platform 100 then connect the tip wire 40a to the wind turbine blade 26a while the hoist cable 110 and winch 106 carry the weight of the tip wire 40a. Once the connection with the wind turbine blade 26a is made, the pulley 104 and hoist cable 110 are disconnected from the wind turbine blade 26a and the tip wire 40a, respectively. A similar process is used to couple the tip wire 42a to the wind turbine blade 26b.

Although not shown, the process is repeated for each remaining cable assembly. For example, after rotating the rotor 22 by 120°, the next one of the cable assemblies 32b and 32c may be let out of the central hub 24. Personnel may use the pulley 104, the winch 106, and the hoist cable 110 to couple the cable assembly 32b or 32c to the remaining adjacent pairs of wind turbine blades 26b and 26c and 26c and 26a.

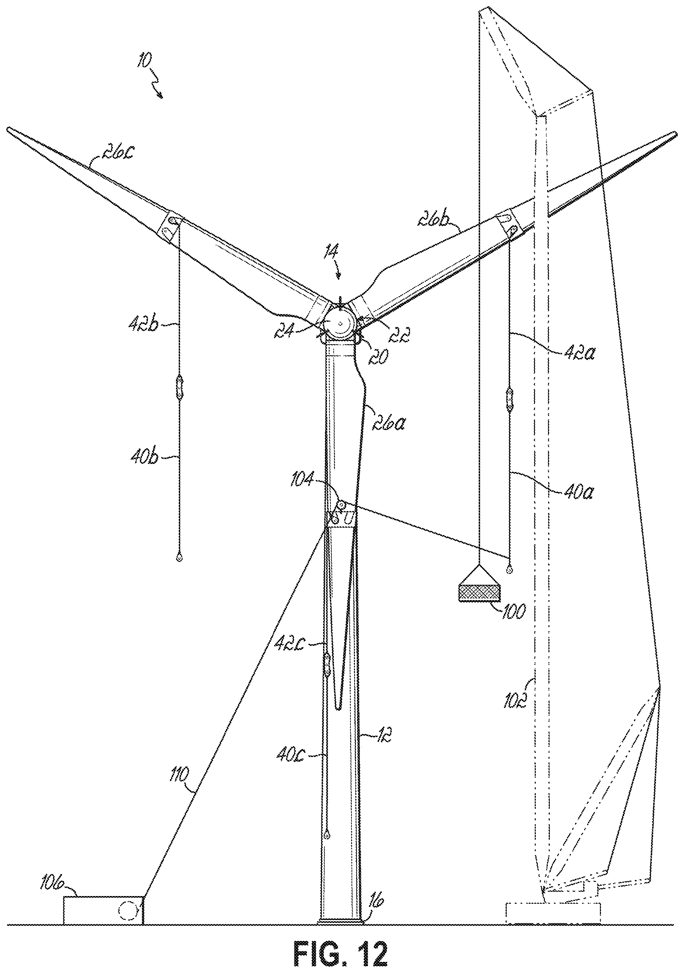

Another example of installation of at least one of the wires 40a-40c, 42a-42c, 44a-44c before installation of the rotor 22 is shown in Fig. 12. In the exemplary embodiment, tip wire pairs 40a and 42a, 40b and 42b, and 40c and 42c are coupled to the wind turbine blades 26a, 26b, 26c only at one of the two ends of the tip cables. The wires 40a-40c, 42a-42c, 44a-44c may be coupled to the wind turbine blades 26a, 26b, 26c at the installation site or at a manufacturing facility and so may be prepositioned prior to installation of the wind turbine blades 26a, 26b, 26c. Although not shown, the tip wire pairs 40a and 42a, 40b and 42b, 40c and 42c are coupled to one wind turbine blade while the wind turbine blade is accessible at ground level. The ends of tip wire 42a, 42b, and 40c are shown coupled to the wind turbine blades 26b, 26c, and 26a, respectively. The wind turbine blades 26a, 26b, 26c are then installed on the central hub 24. The tip wire pairs 40a and 42a, 40b and 42b, 40c and 42c may be left to hang from the respective blade or temporarily secured near a root of the blade or near a tip of the blade.

Following installation of the wind turbine blades 26a, 26b, 26c, the tip wire pairs 40a and 42a, 40b and 42b, 40c and 42c may be left to hang from their respective connection at the wind turbine blades 26a, 26b, 26c or stay temporarily secured until it is time to install the individual wires. In the exemplary embodiment, each of the pairs is left to hang from one respective blade. With reference to Fig. 12, in the exemplary embodiment, once the tip wire pair 40a and 42a is hanging from the wind turbine blade 26b, personnel on the platform 100 couple a pulley 104 to the wind turbine blade 26a and couple the hoist cable 110 by way of the pulley 104 to the wire pair 40a and 42a. Activating the winch 106 draws the wire pair 40a and 42a towards the wind turbine blade 26a. While the hoist cable 110 and winch 106 hold the weight of the wire pair 40a and 42a, personnel on the platform 100 couple the other end of the wire pair 40a and 42a to the wind turbine blade 26a. The rotor 22 is then rotated 120° and the next cable pair is coupled to the adjacent wind turbine blade. Alternatively, or additionally, the rotor may be rotated a fraction of rotation, so the cable-to-blade connection on the blade 26a is arranged closer to vertically below the cable-to-blade connection on the blade 26b where the tip cable 42a is already connected. This way, gravity will do most of the movement of the tip cable 40a towards the cable-to-blade connection on blade 26a so the required tension in the hoist cable 110 is reduced significantly.

For example, rotating the rotor 22 in Fig. 12 counter clockwise positions the wind turbine blade 26c in the downward or 6 o'clock position and positions the wind turbine blade 26a in the 2 o'clock position. The wire pair 40c and 42c hangs from its connection to the wind turbine blade 26a. The hanging position may be generally parallel to the downward oriented wind turbine blade 26c. In that orientation of the rotor 22, the tip wire pair 40c and 42c is coupled to the wind turbine blade 26c in the same manner described above with respect to connection of the tip wire pair 40a and 42a to the wind turbine blade 26a. Once the tip wire pair 40c and 42c is coupled to the wind turbine blade 26c, the process is repeated for coupling the remaining wire pair 40b and 42b, which hangs from the wind turbine blade 26c, to the wind turbine blade 26b.

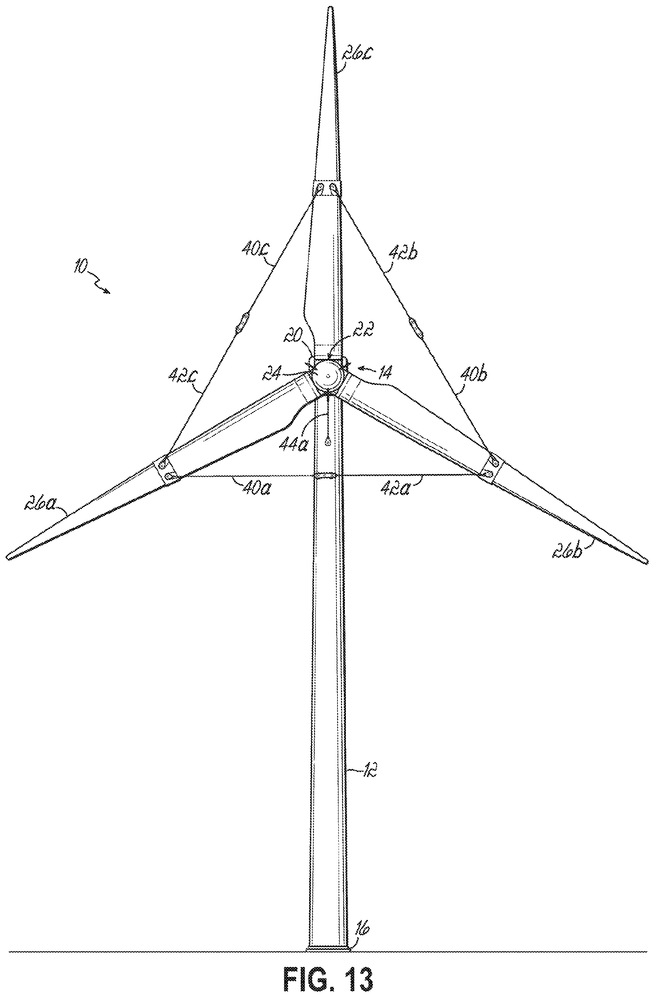

Once the tip wire pairs 40a and 42a, 40b and 42b, and 40c and 42c are coupled to their respective adjacent wind turbine blades 26a, 26b, 26c, the center cables 44a, 44b, 44c are coupled between the central hub 24 and the respective tip wire pairs 40a and 42a, 40b and 42b, and 40c and 42c. In the exemplary embodiment shown in Fig. 13, the center cable 44a is lowered from within the hub 24 or is hoisted into position with a crane (not shown) or lowered via a jib crane (not shown) from the central hub 24. The center cable 44a is coupled to the central hub 24 at one end and the tip wire pair 40a, 42a at the other end. By way of example, the connection point between the three cables may be provided by connection 50a (e.g., Fig. 1B). Once the cable assembly 32a is complete, the rotor 22 is rotated 120°. Although not shown, after rotating the rotor 22, the center cable 44b is lowered from the hub 24 and coupled in the same manner to each of the tip wire pair 40b and 42b and central hub 24. Following another 120° rotation of the rotor 22, the center cable 44c is lowered from and coupled to the tip wire pair 40c and 42c and central hub 24. Alternatively (not shown), the center cable 44a, 44b, 44c may be coupled to the respective tip wire pairs and coupled to the wind turbine blades 26a, 26b, 26c at the installation site or at a manufacturing facility and so may be prepositioned prior to installation of the wind turbine blades 26a, 26b, 26c. Then, after installing the tip wire pairs, the centre cables may be connected to the central hub 24 using a pulley, a hoist cable and a winch.

Following installation of all cable assemblies 32a, 32b, 32c on the rotor 22, the cable system 30 is tensioned.

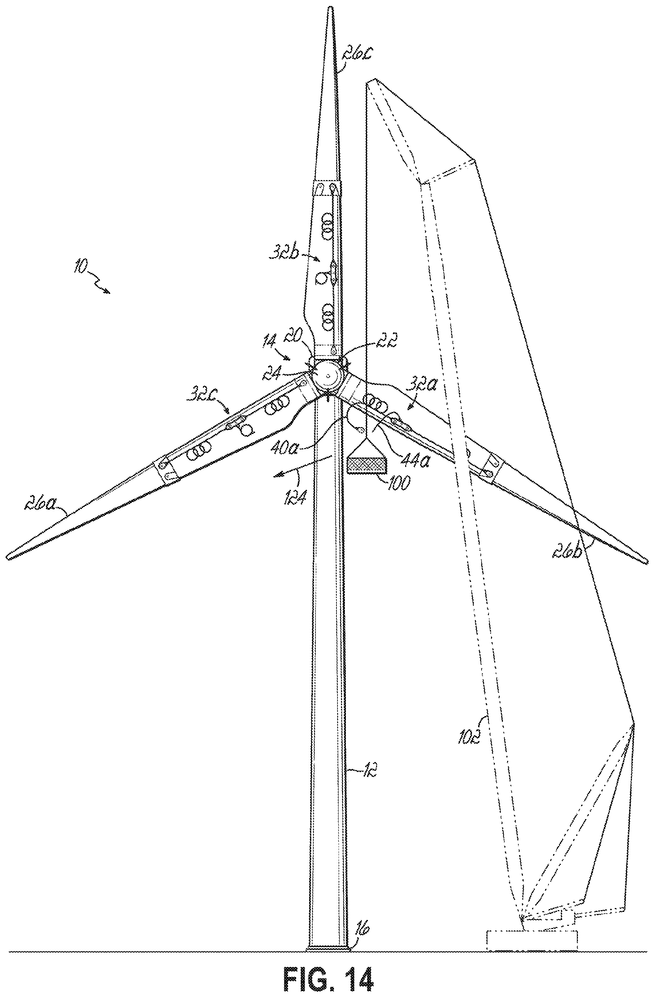

In another exemplary embodiment and with reference to Fig. 14, the cable assembles 32a, 32b, 32c are assembled to a respective one of the wind turbine blades 26a, 26b, 26c prior to installation of the blades 26a, 26b, 26c on the central hub 24. Although not shown, one end of the tip wire 40a, 42a, 40b, 42b, and 40c, 42c is coupled to one of the blades 26a, 26b, 26c. The other ends of the tip wire 40a, 42a, 40b, 42b, and 40c, 42c and the center cable 44a, 44b, 44c are temporally connected to the corresponding wind turbine blade (such as near a root end of the blade) so that the blade can be installed on the central hub 24 without the cable assembly 32a, 32b, 32c coming loose or swinging from the blade. With reference to Fig. 14, connection of the cable assembly 32a is made while the blade 26b is on the ground and before attachment of the blade 26b to the central hub 24. The remaining two connections, one to the central hub 24 and one to the wind turbine blade 26a, are completed following installation of all the blades 26a, 26b, 26c on the central hub 24. A similar arrangement is made with each of the remaining capable assemblies 32b and 32c.

In Fig. 14, once each of the wind turbine blades 26a, 26b, 26c is installed on the central hub 24, the platform 100 is positioned so that personnel can disconnect the temporary connection of the assembly 32a at the root end of the blade 26b. In that regard, one end of the center cable 44a is disconnected and one end of the tip wire 40a is disconnected from the wind turbine blade 26b. The platform 100 with the ends of wire 40a and end of cable 44a are carried to their respective connection points on the central hub 24 and the wind turbine blade 26a, respectively.

Personnel on the platform 100 couple the center cable 44a to the central hub 24. As shown in Fig. 14, the platform 100 is then repositioned (in the direction of arrow 124) near the connection point on the wind turbine blade 26a while pulling the tip wire 40a toward the blade 26a so that personnel can couple the tip wire 40a to the wind turbine blade 26a. In this way, the cable assembly 32a is connected to the wind turbine blades 26a and 26b and central hub 24. Following coupling the cable assembly 32a, the rotor 22 is rotated 120° and one of the remaining cable assemblies 32b and 32c is coupled to the central hub 24 and wind turbine blades 26a, 26b, 26c. The rotor 22 is again rotated 120° and the final cable assembly 32b or 32c is coupled to the wind turbine blades 26a, 26b, 26c and the central hub 24. Following coupling of each assembly 32a, 32b, 32c, the cable system 30 is tensioned. Alternatively, in place of the platform 100 and crane 102, a winch, pulley, and hoist cable, such as the winch 106, pulley 104, and hoist cable 110 shown in Fig. 2 may be used to pull the tip wire 40a toward the blade 26a similar to that shown in Fig. 7.

The invention is exemplified with a single-rotor HAWT but is similarly useful for a multi rotor HAWT where the method may be used for installing a cable system for each of the rotors using the same steps and sequence as described above and thereby achieving the same advantages.

While the present invention has been illustrated by a description of various preferred embodiments and while these embodiments have been described in some detail, it is not the intention of the Applicant to restrict or in any way limit the scope of the appended claims to such detail. Additional advantages and modifications will readily appear to those skilled in the art.

## Claims

1. A method of installing a cable system (30) including a cable assembly (32a-c) on a wind turbine (10) including a tower (12) and a rotor (22), the rotor (22) having a central hub (24) with a plurality of blades (26a-c) coupled to the central hub (24), the cable assembly (32a-c) including a first cable (40a-c, 42a-c, 44a-c), the method comprising:
coupling a pulley (104) to the hub (24) or to one of the plurality of blades (26a-c);
operatively coupling a hoist cable (110) to the pulley (104);
attaching the hoist cable (110) to the first cable (40a-c, 42a-c, 44a-c);
pulling the hoist cable (110) to draw the first cable (40a-c, 42a-c, 44a-c) toward the pulley (104); and
coupling the first cable (40a-c, 42a-c, 44a-c) to the hub (24) or to the one of the plurality of blades (26a-c).

2. The method of claim 1, wherein the cable assembly (32a-c) includes a second cable (40a-c, 42a-c, 44a-c) that is coupled to the hub (24) or to another blade of the plurality of blades (26a, 26b, 26c) and wherein coupling the first cable (40a-c, 42a-c, 44a-c) includes coupling the first cable (40a-c, 42a-c, 44a-c) to the one of the plurality of blades (26a-c).

3. The method of claim 1, wherein the cable assembly (32a-c) includes a second cable (40a-c, 42a-c, 44a-c) and coupling the first cable (40a-c, 42a-c, 44a-c) includes coupling the first cable (40a-c, 42a-c, 44a-c) to the hub (24), the method further comprises:
coupling a pulley (104) to one of the plurality of blades (26a-c);
after coupling the first cable (40a-c, 42a-c, 44a-c) to the hub (24) operatively coupling a hoist cable (110) to the pulley (104);
attaching the hoist cable (110) to the second cable (40a-c, 42a-c, 44a-c);
pulling the hoist cable (110) to draw the second cable (40a-c, 42a-c, 44a-c) toward the pulley (104); and
coupling the second cable (40a-c, 42a-c, 44a-c) to the one of the plurality of blades (26a-c).

4. The method of claim 3, wherein the cable assembly (32a-c) includes a third cable (40a-c, 42a-c, 44a-c), the method further comprising:
coupling a pulley (104) to a different one of the plurality of blades (26a-c);
operatively coupling a hoist cable (110) to the pulley (104);
attaching the hoist cable (110) to the third cable (40a-c, 42a-c, 44a-c);
pulling the hoist cable (110) to draw the third cable (40a-c, 42a-c, 44a-c) toward the pulley (104); and
coupling the third cable (40a-c, 42a-c, 44a-c) to the different one of the plurality of blades (26a-c).

5. The method of claim 1, wherein the cable assembly (32a-c) is prepositioned at the central hub (24), the method further comprising lowering the cable assembly (32a-c) including the first cable (40a-c, 42a-c, 44a-c) from the central hub (24).

6. The method of claim 5, wherein the cable assembly (32a-c) includes a second cable (40a-c, 42a-c, 44a-c) that is coupled to the central hub (24), wherein lowering the cable assembly (32a-c) includes lowering the cable assembly (32a-c) from the second cable (40a-c, 42a-c, 44a-c), and wherein coupling the first cable (40a-c, 42a-c, 44a-c) includes coupling the first cable (40a-c, 42a-c, 44a-c) to the one of the plurality of blades (26a-c).

7. The method of claim 5 or 6, wherein the cable assembly (32a-c) includes a third cable (40a-c, 42a-c, 44a-c) and lowering the cable assembly (32a-c) from the central hub (24) includes lowering the third cable (40a-c, 42a-c, 44a-c) from the central hub (24), the method further comprises:
coupling a pulley (104) to an adjacent one of the plurality of blades (26a-c);
after coupling the first cable (40a-c, 42a-c, 44a-c) operatively coupling a hoist cable (110) to the pulley (104);
attaching the hoist cable (110) to the third cable (40a-c, 42a-c, 44a-c);
pulling the hoist cable (110) to draw the third cable (40a-c, 42a-c, 44a-c) toward the pulley (104); and
coupling the third cable (40a-c, 42a-c, 44a-c) to the adjacent one of the plurality of blades (26a-c).

8. The method of claim 1, wherein the cable assembly (32a-c) includes a second cable (40a-c, 42a-c, 44a-c) and at least the first and second cables (40a-c, 42a-c, 44a-c) of the cable assembly (32a-c) are prepositioned on another of the plurality of blades (26a-c), the method further comprising:
coupling the second cable (40a-c, 42a-c, 44a-c) to the another of the blades (26a-c), and
wherein coupling the first cable (40a-c, 42a-c, 44a-c) includes coupling the first cable to the one of the plurality of blades (26a-c).

9. The method of claim 8, wherein the cable assembly (32a-c) includes a third cable (40a-c, 42a-c, 44a-c), the method further comprising coupling the third cable (40a-c, 42a-c, 44a-c) to the central hub (24).

10. The method of claim 8 or 9, wherein the first cable is temporarily connected to the another of the plurality of blades, the method further comprising disconnecting the first cable (40a-c, 42a-c, 44a-c) from the another of the plurality of blades (26a-c).

11. The method of any preceding claim, wherein coupling the first cable (40a-c, 42a-c, 44a-c) includes holding the cable assembly (32a-c) in position with the hoist cable (110) while coupling the first cable (40a-c, 42a-c, 44a-c) to the hub (24) or to the one of the plurality of blades (26a-c).

12. The method of any preceding claim, further comprising:
rotating the rotor (22); and
installing a second cable assembly (32a-c) on the rotor (22).

13. A method of installing a wind turbine (10) including a tower (12) and a rotor (22) on the tower (22) and having a central hub (24), the method comprising:
installing the central hub (24) on the tower (12);
installing a plurality of wind turbine blades (26a-c) on the central hub (24); and
installing a cable system (30) on the rotor (22) between adjacent wind turbine blades (26a-c) and the central hub (24),
wherein installing the cable system (30) further comprises:
coupling a pulley (104) to at least one of the central hub (24) and one or more of the plurality of blades (26a-c);
operatively coupling a hoist cable (110) to the pulley (104);
attaching the hoist cable (110) to the cable system (30);
pulling the hoist cable (110) to draw the cable system (30) toward the pulley (104); and
coupling the cable system (30) to the central hub (24) or to the one or more of the plurality of blades (26a-c).

14. The method of claim 13, wherein the cable system (30) includes a cable assembly (32a-c) for each wind turbine blade (26a-c).

15. The method of claim 14, wherein at least one of the cable assemblies (32a-c) is prepositioned on at least one of the central hub (24) or the one or more of the plurality of blades (26a-c).

## Patentansprüche

1. Verfahren zur Installation eines Kabelsystems (30), das eine Kabelanordnung (32a-c) beinhaltet, an einer Windkraftanlage (10), die einen Turm (12) und einen Rotor (22) beinhaltet, wobei der Rotor (22) eine zentrale Nabe (24) mit einer Vielzahl von mit der zentralen Nabe (24) gekoppelten Blättern (26a-c) aufweist und die Kabelanordnung (32a-c) ein erstes Kabel (40a-c, 42a-c, 44a-c) beinhaltet, wobei das Verfahren umfasst:
Koppeln einer Riemenscheibe (104) mit der Nabe (24) oder mit einem der Vielzahl von Blättern (26a-c);
Wirkkoppeln eines Hebezeugkabels (110) mit der Riemenscheibe (104);
Anbringen des Hebezeugkabels (110) am ersten Kabel (40a-c, 42a-c, 44a-c);
Ziehen des Hebezeugkabels (110), um das erste Kabel (40a-c, 42a-c, 44a-c) in Richtung der Riemenscheibe (104) zu holen; und
Koppeln des ersten Kabels (40a-c, 42a-c, 44a-c) mit der Nabe (24) oder mit einem der Vielzahl von Blättern (26a-c).

2. Verfahren nach Anspruch 1, wobei die Kabelanordnung (32a-c) ein zweites Kabel (40a-c, 42a-c, 44a-c) beinhaltet, das mit der Nabe (24) oder einem anderen Blatt der Vielzahl von Blättern (26a, 26b, 26c) gekoppelt ist, und wobei Koppeln des ersten Kabels (40a-c, 42a-c, 44a-c) Koppeln des ersten Kabels (40a-c, 42a-c, 44a-c) mit dem einen der Vielzahl von Blättern (26a-c) beinhaltet.

3. Verfahren nach Anspruch 1, wobei die Kabelanordnung (32a-c) ein zweites Kabel (40a-c, 42a-c, 44a-c) beinhaltet und Koppeln des ersten Kabels (40a-c, 42a-c, 44a-c) Koppeln des ersten Kabels (40a-c, 42a-c, 44a-c) mit der Nabe (24) beinhaltet, wobei das Verfahren weiter umfasst:
Koppeln einer Riemenscheibe (104) mit einem der Vielzahl von Blättern (26a-c);
nach dem Koppeln des ersten Kabels (40a-c, 42a-c, 44a-c) mit der Nabe (24) Wirkkoppeln eines Hebezeugkabels (110) mit der Riemenscheibe (104);
Anbringen des Hebezeugkabels (110) am zweiten Kabel (40a-c, 42a-c, 44a-c);
Ziehen des Hebezeugkabels (110), um das zweite Kabel (40a-c, 42a-c, 44a-c) in Richtung der Riemenscheibe (104) zu holen; und
Koppeln des zweiten Kabels (40a-c, 42a-c, 44a-c) mit einem der Vielzahl von Blättern (26a-c).

4. Verfahren nach Anspruch 3, wobei die Kabelanordnung (32a-c) ein drittes Kabel (40a-c, 42a-c, 44a-c) beinhaltet, wobei das Verfahren weiter umfasst:
Koppeln einer Riemenscheibe (104) mit einem anderen der Vielzahl von Blättern (26a-c);
Wirkkoppeln eines Hebezeugkabels (110) mit der Riemenscheibe (104);
Anbringen des Hebezeugkabels (110) am dritten Kabel (40a-c, 42a-c, 44a-c);
Ziehen des Hebezeugkabels (110), um das dritte Kabel (40a-c, 42a-c, 44a-c) in Richtung der Riemenscheibe (104) zu holen; und
Koppeln des dritten Kabels (40a-c, 42a-c, 44a-c) mit dem anderen der Vielzahl von Blättern (26a-c).

5. Verfahren nach Anspruch 1, wobei die Kabelanordnung (32a-c) an der zentralen Nabe (24) vorpositioniert ist, wobei das Verfahren weiter Absenken der Kabelanordnung (32a-c), die das erste Kabel (40a-c, 42a-c, 44a-c) beinhaltet, von der zentralen Nabe (24) umfasst.

6. Verfahren nach Anspruch 5, wobei die Kabelanordnung (32a-c) ein zweites Kabel (40a-c, 42a-c, 44a-c) beinhaltet, das mit der zentralen Nabe (24) gekoppelt ist, wobei Absenken der Kabelanordnung (32a-c) Absenken der Kabelanordnung (32a-c) vom zweiten Kabel (40a-c, 42a-c, 44a-c) beinhaltet und wobei Koppeln des ersten Kabels (40a-c, 42a-c, 44a-c) Koppeln des ersten Kabels (40a-c, 42a-c, 44a-c) mit einem der Vielzahl von Blättern (26a-c) beinhaltet.

7. Verfahren nach Anspruch 5 oder 6, wobei die Kabelanordnung (32a-c) ein drittes Kabel (40a-c, 42a-c, 44a-c) beinhaltet und Absenken der Kabelanordnung (32a-c) von der zentralen Nabe (24) Absenken des dritten Kabels (40a-c, 42a-c, 44a-c) von der zentralen Nabe (24) beinhaltet, wobei das Verfahren weiter umfasst:
Koppeln einer Riemenscheibe (104) mit einem benachbarten der Vielzahl von Blättern (26a-c);
nach dem Koppeln des ersten Kabels (40a-c, 42a-c, 44a-c) Wirkkoppeln eines Hebezeugkabels (110) mit der Riemenscheibe (104);
Anbringen des Hebezeugkabels (110) am dritten Kabel (40a-c, 42a-c, 44a-c);
Ziehen des Hebezeugkabels (110), um das dritte Kabel (40a-c, 42a-c, 44a-c) in Richtung der Riemenscheibe (104) zu holen; und
Koppeln des dritten Kabels (40a-c, 42a-c, 44a-c) mit dem benachbarten der Vielzahl von Blättern (26a-c).

8. Verfahren nach Anspruch 1, wobei die Kabelanordnung (32a-c) ein zweites Kabel (40a-c, 42a-c, 44a-c) beinhaltet und mindestens das erste und zweite Kabel (40a-c, 42a-c, 44a-c) der Kabelanordnung (32a-c) auf einem anderen der Vielzahl von Blättern (26a-c) vorpositioniert sind, wobei das Verfahren weiter umfasst:
Koppeln des zweiten Kabels (40a-c, 42a-c, 44a-c) mit einem anderen der Blätter (26a-c), und
wobei Koppeln des ersten Kabels (40a-c, 42a-c, 44a-c) Koppeln des ersten Kabels mit einem der Vielzahl von Blättern (26a-c) beinhaltet.

9. Verfahren nach Anspruch 8, wobei die Kabelanordnung (32a-c) ein drittes Kabel (40a-c, 42a-c, 44a-c) beinhaltet, wobei das Verfahren weiter Koppeln des dritten Kabels (40a-c, 42a-c, 44a-c) mit der zentralen Nabe (24) umfasst.

10. Verfahren nach Anspruch 8 oder 9, wobei das erste Kabel vorübergehend mit einem anderen der Vielzahl von Blättern verbunden ist, wobei das Verfahren weiter Trennen des ersten Kabels (40a-c, 42a-c, 44a-c) von einem anderen der Vielzahl von Blättern (26a-c) umfasst.

11. Verfahren nach einem vorstehenden Anspruch, wobei Koppeln des ersten Kabels (40a-c, 42a-c, 44a-c) Halten der Kabelanordnung (32a-c) in Position mit dem Hebezeugkabel (110) beim Koppeln des ersten Kabels (40a-c, 42a-c, 44a-c) mit der Nabe (24) oder mit einem der Vielzahl von Blättern (26a-c) beinhaltet.

12. Verfahren nach einem vorstehenden Anspruch, weiter umfassend:
Drehen des Rotors (22); und
Installieren einer zweiten Kabelanordnung (32a-c) am Rotor (22).

13. Verfahren zum Installieren einer Windkraftanlage (10), die einen Turm (12) und einen Rotor (22) auf dem Turm (22) beinhaltet und eine zentrale Nabe (24) aufweist, wobei das Verfahren umfasst:
Installieren der zentralen Nabe (24) am Turm (12);
Installieren einer Vielzahl von Windkraftanlagenblättern (26a-c) an der zentralen Nabe (24); und
Installieren eines Kabelsystems (30) am Rotor (22) zwischen benachbarten Windkraftanlagenblättern (26a-c) und der zentralen Nabe (24),
wobei Installieren des Kabelsystems (30) weiter umfasst:
Koppeln einer Riemenscheibe (104) mit mindestens einem der zentralen Nabe (24) und einem oder mehreren der Vielzahl von Blättern (26a-c);
Wirkkoppeln eines Hebezeugkabels (110) mit der Riemenscheibe (104);
Anbringen des Hebezeugkabels (110) am Kabelsystem (30);
Ziehen des Hebezeugkabels (110), um das Kabelsystem (30) in Richtung der Riemenscheibe (104) zu holen; und
Koppeln des Kabelsystems (40a-c, 42a-c, 44a-c) mit der zentralen Nabe (24) oder mit einem oder mehreren der Vielzahl von Blättern (26a-c).

14. Verfahren nach Anspruch 13, wobei das Kabelsystem (30) eine Kabelanordnung (32a-c) für jedes Windkraftanlagenblatt (26a-c) beinhaltet.

15. Verfahren nach Anspruch 14, wobei mindestens eine der Kabelanordnungen (32a-c) auf mindestens einem von der zentralen Nabe (24) oder dem einen oder mehreren der Vielzahl von Blättern (26a-c) vorpositioniert ist.

## Revendications

1. Procédé d'installation d'un système de câbles (30) incluant un ensemble de câbles (32a-c) sur une éolienne (10) incluant une tour (12) et un rotor (22), le rotor (22) présentant un moyeu central (24) avec une pluralité de pales (26a-c) couplées au moyeu central (24), l'ensemble de câbles (32a-c) incluant un premier câble (40a-c, 42a-c, 44a-c), le procédé comprenant :
le couplage d'une poulie (104) au moyeu (24) ou à l'une de la pluralité de pales (26a-c) ;
le couplage opérationnel d'un câble de levage (110) à la poulie (104) ;
la fixation du câble de levage (110) au premier câble (40a-c, 42a-c, 44a-c) ;
le tirage du câble de levage (110) pour tirer le premier câble (40a-c, 42a-c, 44a-c) vers la poulie (104) ; et
le couplage du premier câble (40a-c, 42a-c, 44a-c) au moyeu (24) ou à l'une de la pluralité de pales (26a-c).

2. Procédé selon la revendication 1, dans lequel l'ensemble de câbles (32a-c) inclut un deuxième câble (40a-c, 42a-c, 44a-c) qui est couplé au moyeu (24) ou à une autre pale de la pluralité de pales (26a, 26b, 26c) et dans lequel le couplage du premier câble (40a-c, 42a-c, 44a-c) inclut le couplage du premier câble (40a-c, 42a-c, 44a-c) à l'une de la pluralité de pales (26a-c).

3. Procédé selon la revendication 1, dans lequel l'ensemble de câbles (32a-c) inclut un deuxième câble (40a-c, 42a-c, 44a-c) et le couplage du premier câble (40a-c, 42a-c, 44a-c) inclut le couplage du premier câble (40a-c, 42a-c, 44a-c) au moyeu (24), le procédé comprend en outre :
le couplage d'une poulie (104) à l'une de la pluralité de pales (26a-c) ;
après avoir couplé le premier câble (40a-c, 42a-c, 44a-c) au moyeu (24), le couplage opérationnel d'un câble de levage (110) à la poulie (104) ;
la fixation du câble de levage (110) au deuxième câble (40a-c, 42a-c, 44a-c) ;
le tirage du câble de levage (110) pour tirer le deuxième câble (40a-c, 42a-c, 44a-c) vers la poulie (104) ; et
le couplage du deuxième câble (40a-c, 42a-c, 44a-c) à l'une de la pluralité de pales (26a-c).

4. Procédé selon la revendication 3, dans lequel l'ensemble de câbles (32a-c) inclut un troisième câble (40a-c, 42a-c, 44a-c), le procédé comprenant en outre :
le couplage d'une poulie (104) à une autre de la pluralité de pales (26a-c) ;
le couplage opérationnel d'un câble de levage (110) à la poulie (104) ;
la fixation du câble de levage (110) au troisième câble (40a-c, 42a-c, 44a-c) ;
le tirage du câble de levage (110) pour tirer le troisième câble (40a-c, 42a-c, 44a-c) vers la poulie (104) ; et
le couplage du troisième câble (40a-c, 42a-c, 44a-c) à l'autre de la pluralité de pales (26a-c).

5. Procédé selon la revendication 1, dans lequel l'ensemble de câbles (32a-c) est prépositionné au niveau du moyeu central (24), le procédé comprenant en outre l'abaissement de l'ensemble de câbles (32a-c) incluant le premier câble (40a-c, 42a-c, 44a-c) à partir du moyeu central (24).

6. Procédé selon la revendication 5, dans lequel l'ensemble de câbles (32a-c) inclut un deuxième câble (40a-c, 42a-c, 44a-c) qui est couplé au moyeu central (24), dans lequel l'abaissement de l'ensemble de câbles (32a-c) inclut l'abaissement de l'ensemble de câbles (32a-c) à partir du deuxième câble (40a-c, 42a-c, 44a-c), et dans lequel le couplage du premier câble (40a-c, 42a-c, 44a-c) inclut le couplage du premier câble (40a-c, 42a-c, 44a-c) à l'une de la pluralité de pales (26a-c).

7. Procédé selon la revendication 5 ou 6, dans lequel l'ensemble de câbles (32a-c) inclut un troisième câble (40a-c, 42a-c, 44a-c) et l'abaissement de l'ensemble de câbles (32a-c) à partir du moyeu central (24) inclut l'abaissement du troisième câble (40a-c, 42a-c, 44a-c) à partir du moyeu central (24), le procédé comprend en outre :
le couplage d'une poulie (104) à une pale adjacente de la pluralité de pales (26a-c) ;
après avoir couplé le premier câble (40a-c, 42a-c, 44a-c), le couplage opérationnel d'un câble de levage (110) à la poulie (104) ;
la fixation du câble de levage (110) au troisième câble (40a-c, 42a-c, 44a-c) ;
le tirage du câble de levage (110) pour tirer le troisième câble (40a-c, 42a-c, 44a-c) vers la poulie (104) ; et
le couplage du troisième câble (40a-c, 42a-c, 44a-c) à la pale adjacente de la pluralité de pales (26a-c).

8. Procédé selon la revendication 1, dans lequel l'ensemble de câbles (32a-c) inclut un deuxième câble (40a-c, 42a-c, 44a-c) et au moins les premier et deuxième câbles (40a-c, 42a-c, 44a-c) de l'ensemble de câbles (32a-c) sont prépositionnés sur une autre de la pluralité de pales (26a-c), le procédé comprenant en outre :
le couplage du deuxième câble (40a-c, 42a-c, 44a-c) à l'autre des pales (26a-c), et
dans lequel le couplage du premier câble (40a-c, 42a-c, 44a-c) inclut le couplage du premier câble à l'une de la pluralité de pales (26a-c).

9. Procédé selon la revendication 8, dans lequel l'ensemble de câbles (32a-c) inclut un troisième câble (40a-c, 42a-c, 44a-c), le procédé comprenant en outre le couplage du troisième câble (40a-c, 42a-c, 44a-c) au moyeu central (24).

10. Procédé selon la revendication 8 ou 9, dans lequel le premier câble est temporairement relié à l'autre de la pluralité de pales, le procédé comprenant en outre la déconnexion du premier câble (40a-c, 42a-c, 44a-c) de l'autre de la pluralité de pales (26a-c).

11. Procédé selon une quelconque revendication précédente, dans lequel le couplage du premier câble (40a-c, 42a-c, 44a-c) inclut le maintien de l'ensemble de câbles (32a-c) en position avec le câble de levage (110) tout en couplant le premier câble (40a-c, 42a-c, 44a-c) au moyeu (24) ou à l'une de la pluralité de pales (26a-c).

12. Procédé selon une quelconque revendication précédente, comprenant en outre :
la rotation du rotor (22) ; et
l'installation d'un second ensemble de câbles (32a-c) sur le rotor (22).

13. Procédé d'installation d'une éolienne (10) incluant une tour (12) et un rotor (22) sur la tour (22) et présentant un moyeu central (24), le procédé comprenant :
l'installation du moyeu central (24) sur la tour (12) ;
l'installation d'une pluralité de pales d'éolienne (26a-c) sur le moyeu central (24) ; et
l'installation d'un système de câbles (30) sur le rotor (22) entre des pales d'éolienne adjacentes (26a-c) et le moyeu central (24),
dans lequel l'installation du système de câbles (30) comprend en outre :
le couplage d'une poulie (104) à au moins l'un du moyeu central (24) et d'une ou plusieurs de la pluralité de pales (26a-c) ;
le couplage opérationnel d'un câble de levage (110) à la poulie (104) ;
la fixation du câble de levage (110) au système de câbles (30) ;
le tirage du câble de levage (110) pour tirer le système de câbles (30) vers la poulie (104) ; et
le couplage du système de câbles (30) au moyeu central (24) ou aux une ou plusieurs de la pluralité de pales (26a-c).

14. Procédé selon la revendication 13, dans lequel le système de câbles (30) inclut un ensemble de câbles (32a-c) pour chaque pale d'éolienne (26a-c).

15. Procédé selon la revendication 14, dans lequel au moins l'un des ensembles de câbles (32a-c) est prépositionné sur au moins l'un du moyeu central (24) ou des une ou plusieurs de la pluralité de pales (26a-c).
